(19) Europäisches Patentamt
European Patent Office
Office européen des brevets

(11) **EP 2 987 237 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **14718102.8**

(22) Anmeldetag: **16.04.2014**

(51) Int Cl.:
**H02P 9/30** *(2006.01)*     **H02P 9/14** *(2006.01)*
**H02P 9/48** *(2006.01)*

(86) Internationale Anmeldenummer:
**PCT/EP2014/057828**

(87) Internationale Veröffentlichungsnummer:
**WO 2014/170410 (23.10.2014 Gazette 2014/43)**

(54) **HOCHFAHREN DES ERREGERSTROMS EINES AN EIN BORDNETZ EINES KRAFTFAHRZEUGS ANGESCHLOSSENEN MEHRPHASENWECHSELSTROM-GENERATORS BEIM AKTIVIEREN DES GENERATORS**

STARTING THE EXCITING CURRENT OF A MULTI-PHASE ALTERNATING CURRENT GENERATOR CONNECTED TO AN ELECTRICAL SYSTEM OF A MOTOR VEHICLE UPON ACTIVATING THE GENERATOR

ACCROISSEMENT DU COURANT D'EXCITATION D'UN GÉNÉRATEUR DE COURANT ALTERNATIF POLYPHASÉ RACCORDÉ À UN RÉSEAU DE BORD D'UN VÉHICULE AUTOMOBILE LORS DE L'ACTIVATION DU GÉNÉRATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2013 DE 102013207135**

(43) Veröffentlichungstag der Anmeldung:
**24.02.2016 Patentblatt 2016/08**

(73) Patentinhaber: **Bayerische Motoren Werke Aktiengesellschaft**
**80809 München (DE)**

(72) Erfinder:
• **KADRIC, Almas**
**81543 München (DE)**
• **SUDAN, Christoph**
**82547 Eurasburg (DE)**
• **WITTING, Volkmar**
**A-6112 Wattens (AT)**

(56) Entgegenhaltungen:
EP-A1- 0 878 890      WO-A1-2013/087528
WO-A2-2013/050245     DE-A1- 10 358 520

• Freescale Semiconductor: "Alternator Regulator with LIN", , 1. Mai 2011 (2011-05-01), XP002740045, Gefunden im Internet: URL:http://www.datasheetarchive.com/dl/Datasheets-IS13/DSA00254501.pdf [gefunden am 2015-05-26]

**Beschreibung**

Die Erfindung betrifft das Hochfahren des Erregerstroms eines an ein Bordnetz eines Kraftfahrzeugs angeschlossenen Mehrphasenwechselstrom-Generators beim Aktivieren des Generators.

Kraftfahrzeuge umfassen zur Versorgung elektrischer Verbraucher mit elektrischer Energie einen elektrischen Generator, welcher über den Antrieb des Fahrzeugs mit mechanischer Energie versorgt wird. Mit der überschüssigen elektrischen Leistung des Generators wird die Fahrzeugbatterie geladen.

Als Generator wird im Allgemeinen ein Mehrphasenwechselstrom-Generator (Drehstrom-Generator) mit drei oder mehr Phasen verwendet. Hierbei ist der Mehrphasenwechselstrom-Generator typischerweise als elektrische Synchronmaschine realisiert, welche einen durch den Antrieb rotierenden Läufer mit einer Erregerwicklung zur Erzeugung eines Erregermagnetfeldes und einen Ständer mit einer mehrphasigen Ständerwicklung umfasst. Da die elektrischen Verbraucher typischerweise als Gleichstromverbraucher ausgelegt sind und die Batterie zum Laden mit Gleichstrom gespeist wird, ist dem Mehrphasenwechselstrom-Generator ein Gleichrichter nachgeschaltet, der die mehrphasige Wechselspannung in eine Gleichspannung wandelt. Um die gleichgerichtete Generatorspannung auch bei variablem Laststrom und variabler Motordrehzahl konstant zu halten, wird ein Generatorregler verwendet, der den Erregerstrom der Erregerwicklung variiert, so dass eine Schwankung der Generatorspannung ausgeregelt wird.

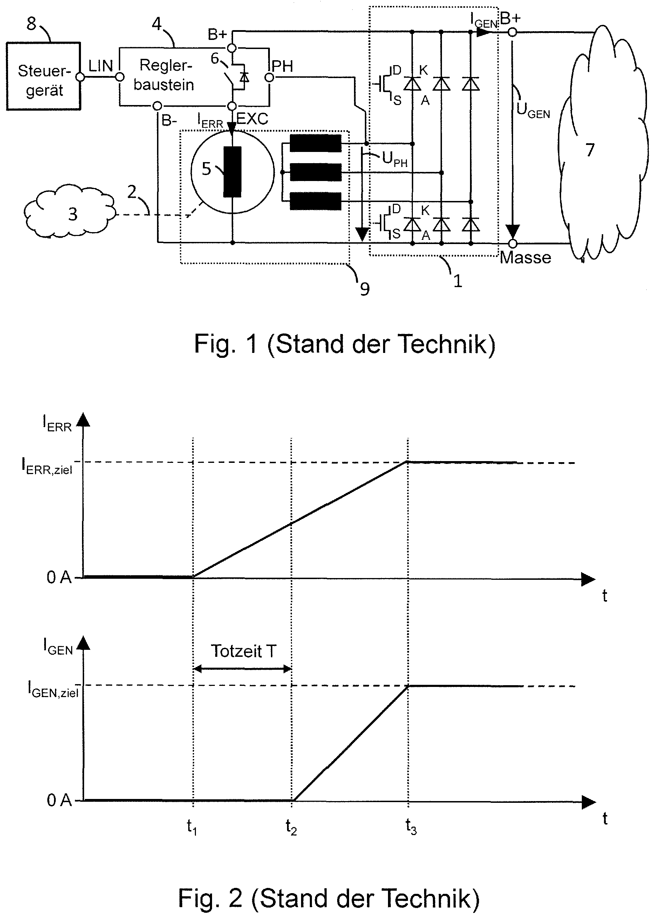

In Fig. 1 ist ein Beispiel für einen konventionellen 14-V-Generator mit einem Gleichrichter 1 für ein Kraftfahrzeug dargestellt. Hier ist beispielhaft ein 3-phasiger Generator dargestellt; der Generator kann aber auch beispielsweise fünf oder sechs Phasen aufweisen. Der 14V-Generator wandelt einen Teil der mechanischen Leistung des Verbrennungsmotors in elektrische Leistung um und gewährleistet so die elektrische Stromversorgung des die Batterie und die Verbraucher umfassenden Fahrzeug-Bordnetzes 7. Der Riementrieb 2 überträgt die mechanische Leistung des Antriebsmotors 3, welche durch die Drehzahl und das Drehmoment bestimmt wird, von der Kurbelwelle auf den Generator. Der durch den Generator erzeugte Generatorstrom $I_{GEN}$ wird über den Anschluss B+ ins Bordnetz 7 abgegeben, um die Batterie zu laden und Verbraucher wie beispielsweise die Zündung, die Scheinwerfer oder das Gebläse mit Strom zu versorgen. In Fig. 1 ist der Generator als fremderregte Synchronmaschine 9 mit angebautem Regler 4 und Gleichrichter 1 ausgeführt; die Synchronmaschine 9, der Gleichrichter 1 und der Regler 4 bilden eine gemeinsame Baueinheit. Der Rotor der Synchronmaschine 9 trägt eine Erregerwicklung 5 und wird beispielsweise über zwei Schleifringe mit dem Erregerstrom $I_{ERR}$ versorgt. Das Magnetfeld der Erregerwicklung 5 wird typischerweise über Polklauen aus magnetisch permeablem Stahl in den Ständer geleitet und induziert bei Rotation in den Ständer-Phasen eine Wechselspannung. Derartige Generatoren werden als Klauenpolgeneratoren bezeichnet. Die induzierte Spannungsamplitude am Phasenausgang der Synchronmaschine hängt von der Generatordrehzahl $n_{GEN}$ und dem Erregerstrom $I_{ERR}$ ab. Die Generatordrehzahl $n_{GEN}$ des Generators ist proportional zur Drehzahl des Antriebsmotors 3. Bei einer gegebenen Drehzahl des Motors 3 und gegebener Generatorspannung $U_{GEN}$ steigt das Lastmoment an der Kurbelwelle mit Zunahme des abgegebenen Generatorstromes $I_{GEN}$. Der Gleichrichter 1 wandelt die Wechselspannungen der Ständer-Phasen in die für das Bordnetz 7 erforderliche Gleichspannung $U_{GEN}$.

Für den in Fig. 1 dargestellten Gleichrichter 1 wird eine Brückenschaltung mit einem an die Bordnetzspannung angeschlossenen High-Side-Halbleiterschalter und einem an die Masse angeschlossenen Low-Side-Halbleiterschalter pro Phase verwendet, so dass jeweils beide Halbschwingungen jeder Phase zur Gleichrichtung verwendet werden. Bei einem 3-Phasenwechselstrom-Generator wird ein derartiger Gleichrichter auch als Sechspulsgleichrichter bezeichnet. Als Halbleiterschalter können - wie in Fig. 1 dargestellt - Dioden oder alternativ auch Transistoren, insbesondere MOSFETs (Metal Oxide Semiconductor field effect transistor), verwendet werden. Bei der Realisierung des Gleichrichters 1 wie in Fig. 1 sind die Kathoden K der High-Side-Dioden an den Knoten B+ der positiven Bordnetzspannung angeschlossen und die Anoden A der Low-Side-Dioden an den Masseknoten B- angeschlossen. Bei Verwendung von N-MOSFETs als Halbleiterschalter sind die Drain-Anschlüsse D der High-Side-MOSFETs an den Knoten B+ der positiven Bordnetzspannung angeschlossen und die Source-Anschlüsse S der Low-Side-MOSFETs an den Masseknoten B-angeschlossen (s. die neben den Dioden dargestellten N-MOSFETs). Statt eines in Fig. 1 dargestellten Generators mit einer 3-phasigen elektrischen Maschine 9 kann auch ein Generator mit einer 5-phasigen oder 6-phasigen elektrischen Maschine 9 verwendet werden.

Wenn die Spannungsamplitude am Phasenausgang der elektrischen Maschine 9 genügend hoch wird, wird während einer Halbwelle die High-Side-Diode und während der nachfolgenden Halbwelle die Low-Side-Diode leitend; dann gibt der Generator Gleichstrom ins Bordnetz ab, indem mechanische Rotationsleistung in elektrische Leistung gewandelt wird.

Der Generatorregler 4 stellt den Erregerstrom $I_{ERR}$ so ein, dass der vorgegebene Spannungswert am Ausgang des Gleichrichters 1 erreicht wird. Der Generatorregler 4 passt den Erregerstrom $I_{ERR}$ an, um auch bei sich änderndem Laststrom $I_{GEN}$ und sich ändernder Motordrehzahl die Generatorspannung $U_{GEN}$ zwischen B+ und Masse auf der Sollspannungsvorgabe zu halten. Der Erregerstrom $I_{ERR}$ wird typischerweise durch Variation des Tastverhältnisses der Endstufe 6 variiert, die den Erregerstrom $I_{ERR}$ der Erregerwicklung 5 liefert. Mit zunehmendem Tastverhältnis steigt der Erregerstrom $I_{ERR}$ und bei konstanter Drehzahl und Aufnahme-Leistung der Last auch die Spannung am Generatorausgang.

Unter dem Tastverhältnis der Endstufe 6 wird die Dauer der Einschaltzeit, in der der Schalter der Endstufe 6 eingeschaltet ist, im Verhältnis zu einer Gesamtbetrachtungszeit verstanden. Bei einem Tastverhältnis von 100 % ist der Schalter der Endstufe 6 gleichbleibend eingeschaltet, bei einem Tastverhältnis von 50 % ist der Schalter der Endstufe 6 die Hälfte der Zeit eingeschaltet und bei einem Tastverhältnis von 0 % ist der Schalter der Endstufe 6 gleichbleibend ausgeschaltet. Das Tastverhältnis der Endstufe 6 bestimmt so die Größe des (mittleren) Erregerstroms $I_{ERR}$. Durch die Läuferzeitkonstante wird bei sprungartigem Erhöhen des Tastverhältnisses erst nach einer gewissen Zeit ein konstanter Erregerstrom $I_{ERR}$ erreicht.

Derartige Generatorregler verfügen häufig über eine sogenannte wahlweise aktivierbare Erregerstrombegrenzungsfunktion zur Begrenzung des Erregerstroms auf einen Erregerstromgrenzwert. Wenn diese Funktion aktiviert wird, sorgt der Generatorregler durch Einstellen des Tastverhältnisses dafür, dass der vorgegebene Erregergrenzstrom möglichst nicht überschritten wird.

Bei dem Beispiel in Fig. 1 verfügt der Generatorregler 4 über eine Kommunikationsschnittstelle für einen Datenbus im Fahrzeug. An den Datenbus ist neben dem Generatorregler 4 ein Steuergerät 8 angeschlossen. Der Regler 4 erhält über die Kommunikationsschnittstelle einen Sollspannungswert vom Motorsteuergerät und meldet den eigenen Zustand an das Motorsteuergerät. Bei der Kommunikationsschnittstelle handelt es sich beispielsweise um eine Kommunikationsschnittstelle für den LIN-Bus (LIN - Local Interconnect Network). Zum Anschluss des Generatorreglers 4 an den Bus ist in Fig. 1 der Anschluss LIN vorgesehen.

Der Regler 4 ist in Form eines Halbleiterbausteins implementiert. Der beispielhafte in Fig. 1 dargestellte über den LIN-Bus kommunizierende Regler-Halbleiterbaustein 4 verfügt über fünf Anschlüsse, mit denen er beispielsweise die erforderlichen Generatorgrößen erfassen kann und mit dem Steuergerät 8 kommunizieren kann. Die nach außen sichtbare Funktionalität und die Schnittstellen eines derartigen LIN-Generatorregler-ASIC 4 mit fünf Anschlüssen sind in allgemeiner Form spezifiziert worden; derartige LIN-Generatorregler-Halbleiterbausteine 4 sind von verschiedenen Chiphersteller erhältlich. Zwei Beispiele für derartige LIN-Generatorregler-Halbleiterbausteine 4 mit fünf Anschlüssen sind der TLE8880 der Firma Infineon und der CR665 der Firma Bosch.

Die Anschlüsse des beispielhaften Regler-Halbleiterbausteins 4 in Fig. 1 sind wie folgt definiert:

- B- (Batterie Minus): Masseanschluss, beispielsweise an den Motorblock über das leitfähige Gehäuse des Generators;
- B+ (Batterie Plus): Anschluss zur Stromversorgung des Reglers 4 und der Erregerwicklung 5 sowie zur Spannungsmessung; die Verbindung zur Batterie erfolgt via den Kabelbaum im Fahrzeug;
- LIN: Anschluss der LIN-Bus-Schnittstelle zur Kommunikation mit dem Steuergerät 8; über den Anschluss LIN wird ein Sollspannungswert, ein Erregerstromgrenzwert und ein Load-Response-Wert empfangen und der Generatorzustand gemeldet; ein Sollspannungswert von 10,6 V schaltet den Generator aus, ab einem Sollspannungswert von 10,625 V lassen sich Spannungen bis 16,000V vorgeben; bei Vorgabe eines Erregergrenzstroms größer null wird die Erregerstrombegrenzung aktiviert;
- EXC: Anschluss zum Einprägen des Erregerstromes in die Erregerwicklung;
- PH: Anschluss zum Entgegennehmen der Phasenspannung $U_{PH}$.

Sobald ein gültiger Sollspannungswert im Regler-Halbleiterbaustein 4 vorliegt und eine untere Drehzahlschwelle überschritten wird (was durch Auswertung der Phasenfrequenz erfolgt) und somit der Motor gestartet ist, wird die Generatorspannung $U_{GEN}$ zwischen Pin B+ und der Masse entsprechend geregelt. Als Stellgröße dient das Tastverhältnis an der Erregerstrom-Endstufe 6. Mit zunehmendem Tastverhältnis steigt der Erregerstrom $I_{ERR}$. und bei konstanter Drehzahl und Aufnahme-Leistung der Last auch die Spannung am Generatorausgang. Um insbesondere im Leerlauf den Verbrennungsmotor nicht schlagartig mit einem Lastmoment zu beaufschlagen, kann die Regeldynamik durch Aktivierung einer sogenannten Load-Response-Funktion eingeschränkt werden. Die Load-Response-Control-Funktion stellt sicher, dass der Generator nur langsam Lastmoment vom Verbrennungsmotor abnimmt, indem sich das Tastverhältnis nur langsam verändert.

Hierzu wird seitens des Steuergeräts 8 dem Regler-Halbleiterbaustein 4 ein Load-Response-Wert LRC vorgegeben, der über den Bus übertragen wird, der die zeitliche Zunahme des Tastverhältnisses der Erregerstrom-Endstufe 6 vorgibt. Der Load-Response-Wert LRC wird dabei beispielsweise auf eine zeitliche Erhöhung des Tastverhältnisses von 0 % auf 100 % bezogen und gibt beispielsweise deren Dauer in Sekunden an. Ein Load-Response-Wert LRC = 3s bedeutet dann also eine Änderungsgeschwindigkeit des Tastverhältnisses, die der Änderungsgeschwindigkeit bei Erhöhung von 0 % auf 100 % in einer Zeitdauer von 3 Sekunden entspricht. Bei der Programmierung des Regler-Bausteins 4 über das Steuergerät 8 stehen beispielsweise Werte von LRC = 0s bis LRC = 15 s zur Verfügung.

Nach Aktivierung des Generators, beispielsweise nach Start des Verbrennungsmotors oder nach dem Zustart des Generators während der Fahrt, beginnt der Generator typischerweise erst nach einer Totzeit im Bereich einer oder mehrerer Sekunden nach dem Zeitpunkt, an dem die Aktivierung des Generators beispielweise über das Steuergerät 8 ausgelöst wurde, damit, Strom ins Bordnetz 7 zu liefern.

Ursächlich hierfür ist die Load-Response-Control-Funktion. Die Load-Response-Control-Funktion begrenzt die Änderungsgeschwindigkeit des Erregerstroms $I_{ERR}$, indem die Änderungsgeschwindigkeit des Tastverhältnisses begrenzt wird. Hierdurch wird die mit der Zunahme des Erregerstroms $I_{ERR}$ verbundene Änderung der Belastung des Antriebsstrangs durch das zusätzliche Generatormoment zeitlich über einen längeren Zeitraum ausgedehnt, so dass die Motorsteuerung insbesondere im Leerlauf genug Zeit hat, das Generatormoment zu kompensieren.

Die vorstehend beschriebene Totzeit, also die Zeitdauer zwischen dem Auslösen der Aktivierung des Generators (beispielsweise durch ein Anforderungssignal seitens der Motorsteuergeräts) und dem Zeitpunkt an dem der Generator beginnt, Strom ans Bordnetz zu liefern, tritt beim Aktivieren des Generators auf, weil die Load-Response-Control-Funktion im Generatorregler 4 den Erregerstrom $I_{ERR}$ langsam erhöht, die Spannungen an den Phasen des Generators jedoch typischerweise im Leerlauf erst im Bereich von 30 - 50 % des angestrebten Erregerstromnennwertes die Bordnetzspannung erreichen und erst nach Erreichen der Bordnetzspannung zuzüglich der Diodenflussspannung die Stromabgabe des Generators an das Bordnetz beginnt. Erst mit Beginn der Stromabgabe erfüllt die Load-Response-Control-Funktion ihre eigentliche Aufgabe und begrenzt durch eine Begrenzung der Änderungsgeschwindigkeit des Erregerstroms $I_{ERR}$ die Änderungsgeschwindigkeit des Generatorstroms $I_{GEN}$ und des Generatormoments, so dass der Antriebsmotor 3 nicht schlagartig, sondern langsam zunehmend mit Zusatzmoment seitens des Generators beaufschlagt wird, wodurch der Leerlaufregler des Motors 3 genug Zeit hat, die Zunahme des Generatormoments zu kompensieren. Eine entsprechende Load-Response-Control-Funktion ist in EP0878890 als "gradual increase control means" offenbart. Diese Funktion lässt sich durch eine Schaltung für eine bestimmte Zeitdauer bei einer Lastanforderung abschalten. Beim Zuschalten des Generators mit Load-Response-Control-Funktion geht also wertvolle Zeit verloren, in der der Generator noch kein Lastmoment erzeugt.

Das Auftreten der Totzeit T beim Aktivieren des Generators wird anhand Fig. 2 beispielhaft erläutert, wobei das untere Diagramm einen beispielhaften Verlauf des Generatorstroms $I_{GEN}$ und das obere Diagramm einen beispielhaften Verlauf des Erregerstroms $I_{ERR}$ darstellt. Zum Zeitpunkt $t_1$ wird die Aktivierung des Generator beispielsweise seitens des Motorsteuergeräts 8 angefordert (beispielsweise durch ein Senden einer Sollspannungsvorgabe größer 10,6 V über den LIN-Bus). Der Generator-Halbleiterbaustein 4 beginnt, den Erregerstrom $I_{ERR}$ mit beschränkter Änderungsgeschwindigkeit zu erhöhen, da aufgrund der Load-Response-Funktion die Änderungsgeschwindigkeit des Tastverhältnisses begrenzt ist. Erst zum Zeitpunkt $t_2$, bei dem Erregerstrom $I_{ERR}$ beispielsweise ungefähr bei 30 - 45 % des Erregernennstromwertes $I_{ERR,nenn}$ liegt und die Spannungen der Phasen des Generators größer als die Generatorspannung werden, so dass die Halbleiterschalter des Gleichrichters zeitweise geschlossen sind, beginnt die Stromabgabe des Generators und der Generatorstrom $I_{GEN}$ steigt langsam an. Die Totzeit T entspricht der Zeitdauer zwischen dem Zeitpunkt $t_1$ und dem Zeitpunkt $t_2$. Der Erregernennstrom $I_{ERR, nenn}$ ist der Erregerstrom, der sich einstellt, wenn der Schalter der Endstufe 6 kontinuierlich eingeschaltet ist, wobei der Strom im Wesentlichen nur noch durch den Innenwiderstand der Erreger-Spule 5 begrenzt ist. Der in Fig. 2 dargestellte Zielwert $I_{ERR,ziel}$ entspricht maximal dem Erregernennstrom $I_{ERR,nenn}$.

Die Dauer der Totzeit ist abhängig von Temperatur, Motordrehzahl und aktueller Bordnetzspannung, welche wiederum vom Batterieladezustand und der Bordnetzlast abhängt, und ist somit nur schwer kalkulierbar. Vor allem bei häufigen Startvorgängen des Motors bei Verwendung einer Motor-Start-Stopp-Automatik summiert sich eine Vielzahl dieser Totzeiten, in der der Generator unnötigerweise keinen Strom liefern kann, wodurch die die Ladebilanz verschlechtert wird.

Aufgrund der durch die Load-Response-Control-Funktion hervorgerufenen Totzeit liefert der Generator bei einem Motorstart ungefähr erst 4s später Strom als dies ohne Load-Response-Control-Funktion der Fall wäre. Wenn diese Totzeit theoretisch auf 0 reduziert würde und der Generator sofort Strom ins Bordnetz liefern könnte, könnte beispielsweise während der Zeitdauer von 4s ein Generatorstrom von 20 A geliefert werden. Bei Annahme beispielsweise von 300.000 Motorstarts (inklusive Motorstarts über das Motor-Start-Stopp-System nach kurzen Standphasen) über der Lebensdauer der Batterie geht also über der Lebensdauer eine Gesamtladungsmenge von ungefähr 6667 Ah verloren, wobei der jeweilige Anteil pro Motorstart zunächst nicht vom Generator geliefert wird und stattdessen nach Motorstart aus der Batterie kommt, die danach über den Generator nachgeladen werden muss. Diese Gesamtladungsmenge entspricht ungefähr 210 theoretischen Ladezyklen (35% Tiefe) einer 90Ah-Batterie über Fahrzeuglebensdauer. Bei einer angenommenen Lebensdauer von 1500 Ladezyklen einer typischen Blei-Säure-Batterie entsprechen diese 210 Ladezyklen, die sich bei Reduzierung der Totzeit auf null einsparen ließen, einer Verlängerung der Batterielebensdauer von ungefähr 15%.

Es ist Aufgabe der Erfindung, ein Verfahren zum Erhöhen des Erregerstroms beim Aktivieren des Generators und entsprechendes Steuergerät zur Ansteuerung des Regler-Halbleiterbausteins anzugeben, wobei das Verfahren bzw. das Steuergerät eine geringe Totzeit bis zur Stromabgabe ins Bordnetz ermöglicht.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein Verfahren zum Hochfahren des Erregerstroms eines Mehrphasenwechselstrom-Generators beim Aktivieren des Generators, dem ein Gleichrichter zum Erzeugen einer gleichgerichteten Spannung nachgeschaltet ist. Hierbei werden zwei alternative Verfahren durch die Merkmale der Ansprüche 1 und 2 definiert. Das Hochfahren des Erregerstroms findet insbesondere im Leerlaufbetrieb des Antriebsmotors statt. Die gleichgerichtete Generatorspannung wird über einen Regler-Halbleiterbaustein geregelt. Zur Regelung der Generatorspannung wird ein Erregerstrom eingestellt, wobei der Erregerstrom wiederum über ein seitens des Regler-Halbleiterbausteins eingestelltes Tastverhältnis eingestellt wird.

Der Regler-Halbleiterbaustein umfasst eine Erregerstrombegrenzungsfunktion zur Begrenzung des Erregerstroms auf einen Erregerstromgrenzwert. Außerdem ist eine Load-Response-Control-Funktion zur Begrenzung der zeitlichen Zunahme des Tastverhältnisses in dem Regler-Halbleiterbaustein vorgesehen. Bei dem Regler-Halbleiterbaustein handelt es sich beispielsweise um den wie vorstehend beschriebenen konventionellen Regler-Halbleiterbaustein.

Gemäß dem Verfahren wird zum Hochfahren des Erregerstroms der Erregerstrom ausgehend von null unter Verwendung der Erregerstrombegrenzungsfunktion schnell auf einen Erregerstromgrenzwert erhöht. Hierbei wird die Load-Response-Control-Funktion nicht verwendet, so dass die Zunahme des Erregerstroms nicht durch die Load-Response-Control-Funktion begrenzt wird.

Nach Erreichen dieses Erregerstromgrenzwerts wird ein weiteres Erhöhen des Erregerstroms unter Verwendung der Load-Response-Funktion durchgeführt.

Alternativ ist es möglich, auch beim schnellen Erhöhen des Erregerstroms die Load-Response- Control-Funktion zu verwenden; hierbei sollte die Load-Response-Control-Funktion aber so seitens des Steuergeräts eingestellt werden, dass die Load-Response-Control-Funktion eine schnelle zeitliche Zunahme des Tastverhältnisses ermöglicht (schnell im Vergleich zu der Zunahme beim weiteren Erhöhen des Erregerstroms später). Nach Erreichen dieses Erregerstromgrenzwerts erfolgt dann ein weiteres Erhöhen des Erregerstroms auch unter Verwendung der Load-Response-Control-Funktion, jedoch mit langsamerer zeitlicher Zunahme des Tastverhältnisses als vorher bei vorheriger Verwendung der Load-Response-Control-Funktion im Rahmen des schnellen Erhöhens des Erregerstroms.

Dadurch, dass beim schnellen Erhöhen mittels der Strombegrenzungsfunktion schnell der Erregerstromgrenzwert erreicht werden kann, kann die vorstehend beschriebene Totzeit deutlich reduziert werden, so dass der Generator bei einem Motorstart deutlich früher bereits Strom ins Bordnetz liefern kann und damit die Belastung der Batterie deutlich reduziert wird, so dass diese bei gegebener Anzahl von Motorstarts weniger häufig geladen werden muss und so deren Lebensdauer zunimmt.

Gemäß einer bevorzugten Ausführungsform ist der Regler-Halbleiterbaustein eingerichtet, einen Sollspannungswert, einen Erregerstromgrenzwert für die Erregerstrombegrenzungsfunktion und einen Load-Response-Wert von einem mit dem Regler-Halbleiterbaustein verbundenen Steuergerät (insbesondere von einem Motorsteuergerät) entgegenzunehmen. Der Regler-Halbleiterbaustein und das Steuergerät sind vorzugsweise über einen Fahrzeugbus, insbesondere LIN-Bus, miteinander verbunden, über den die vorstehend genannten Werte von dem Steuergerät zum Regler-Halbleiterbaustein übertragen werden.

Der Sollspannungswert dient als Sollgröße für die Regelung der gleichgerichteten Generatorspannung. Der Erregerstromgrenzewert dient als Grenzwert für die Erregerstrombegrenzungsfunktion. Der Load-Response-Wert dient zur Steuerung der zeitlichen Zunahme des Tastverhältnisses bei Verwendung der Load-Response-Control-Funktion. Beispielsweise wird der Load-Response-Wert auf eine zeitliche Erhöhung des Tastverhältnisses von 0 % auf 100 % bezogen und gibt deren Dauer in Sekunden an, wie dies in der Beschreibungseinleitung erläutert wurde.

Zum schnellen Erhöhen des Erregerstroms wird ein Sollspannungswert, ein erster Erregerstromgrenzwert und ein erster Load-Response-Wert seitens des Steuergeräts dem Halbleiter-Baustein vorgegeben, so dass unter Verwendung der Erregerstrombegrenzungsfunktion der Erregerstrom auf den seitens des Steuergeräts vorgegebenen ersten Erregerstromgrenzwert schnell erhöht wird. Der Sollspannungswert sollte dabei vorzugsweise oberhalb der aktuell vorliegenden Bordnetzspannung liegen, da ansonsten der Regler den Erregerstrom typischerweise nicht hochfährt. Ferner ist der Sollspannungswert bei einem in der Beschreibungseinleitung beschriebenen Typ für den Regler-Halbleiterbaustein vorzugsweise größer 10,6 V, wie dies in der Beschreibungseinleitung erläutert wurde (bei 10,6 V ist der Generator bei diesem Reglertyp ansonsten ausgeschaltet).

Der erste Load-Response-Wert wird dabei derart gewählt, dass dieser dem Regler-Halbleiterbaustein für die schnelle Erhöhung des Erregerstroms die Nichtverwendung der Load-Response-Control-Funktion vorgibt. Hierzu kann der Load-Response-Wert beispielsweise auf null gesetzt werden. Alternativ ist es möglich, dass der erste Load-Response-Wert derart gewählt wird, dass dieser dem Regler-Halbleiterbaustein die Verwendung der Load-Response-Control-Funktion mit (im Vergleich zum späteren weiteren Erhöhen des Erregerstroms) schneller zeitlicher Zunahme des Tastverhältnisses vorgibt; in diesem Fall wird die Load-Response-Control-Funktion zwar auch beim schnellen Erhöhen verwendet, jedoch mit verhältnismäßig hoher Änderungsgeschwindigkeit (beispielsweise durch Vorgabe eines Load-Response-Werts LRC = 1s oder LRC = 2s).

Es wird darauf hingewiesen, dass der Sollspannungswert, der Erregerstrombegrenzungswert oder der Load-Response-Control-Wert während des schnellen Erhöhens nicht konstant sein müssen. Beispielsweise wird zunächst ein höherer Erregerstrombegrenzungswert vorgegeben und anschließend wird während des schnellen Erhöhens des Erregerstroms der Erregerstrombegrenzungswert (etwas) reduziert, wobei der Erregerstrom dann auf den reduzierten Erregerstrombegrenzungswert eingestellt wird.

Nach dem Erreichen des Erregerstromgrenzwerts werden zum weiteren Erhöhen des Erregerstroms ein veränderter, zweiter Load-Response-Wert und vorzugsweise auch ein veränderter, zweiter Erregerstromgrenzwert seitens des Steuergeräts dem Regler-Halbleiterbaustein derart vorgegeben, dass unter Verwendung der Load-Response-Funktion der Erregerstrom weiter erhöht wird.

Der veränderte, zweite Load-Response-Wert signalisiert dem Regler-Halbleiterbaustein, dass dieser für die weitere Erhöhung des Erregerstroms (im Unterschied zu vorher) die Load-Response-Control-Funktion verwenden soll. Hierdurch wird verhindert, dass der Antriebsmotor zu schnell durch den Generator belastet wird. Es wäre aber auch alternativ denkbar, dass vorher während des schnellen Erhöhens bereits die Load-Response-Control-Funktion mit verhältnismäßig hoher Änderungsgeschwindigkeit verwendet wurde (beispielsweise LRC = 1s). Bei einer derartigen Alternativlösung signalisiert der veränderte, zweite Load-Response-Wert dem Regler-Halbleiterbaustein, dass dieser die Load-Response-Control-Funktion verwenden soll, jedoch mit langsamerer zeitlicher Zunahme des Tastverhältnisses als vorher (beispielsweise LRC = 9s).

Der veränderte, zweite Erregerstromgrenzwert, der das weitere Erhöhen des Erregerstroms steuert, wird vorzugsweise derart gewählt, dass dieser dem Regler-Halbleiterbaustein für die weitere Erhöhung des Erregerstroms die Nicht-Verwendung der Strombegrenzungsfunktion vorgibt, d. h. die Strombegrenzungsfunktion wird für das weitere Erhöhen des Erregerstroms abgeschaltet. Beispielsweise wird der zweite Erregerstromgrenzwert zu null gewählt, um dem Regler-Halbleiterbaustein zu signalisieren, die Strombegrenzungsfunktion auszuschalten. Es wäre aber denkbar, für die weitere Erhöhung des Erregerstroms die Strombegrenzungsfunktion zu verwenden; in diesem Fall ist dann der veränderte, zweite Erregerstromgrenzwert größer ist als der vorher vorgegebene erste Erregerstromgrenzwert (ansonsten kann der Strom nicht über den ersten Erregerstromgrenzwert hinaus weiter ansteigen).

Das weitere Erhöhen des Erregerstroms sollte nicht zu früh einsetzen, sondern erst dann, wenn sich ein Erregerstrom entsprechend dem Erregerstromgrenzwert im Läufer eingestellt hat und das Tastverhältnis stabil ist. Es sollte aber auch nicht zu spät einsetzen, da ansonsten die Totzeit unnötig erhöht wird. Die Zeitdauer zwischen dem Beginn des schnellen Erhöhens des Erregerstroms und dem Beginn des weiteren Erhöhens des Erregerstroms (in etwas zum Zeitpunkt der Vorgabe des veränderten zweiten Erregerstromgrenzwerts) sollte vorzugsweise im Bereich von 50 ms bis 400 ms liegen.

Es ist von Vorteil, wenn der beim schnellen Erhöhen des Erregerstroms verwendete Erregerstromgrenzwert einem Wert des Erregerstroms entspricht, bei dem der Generator lediglich einen Laststrom der kleiner gleich 15 A ist abgibt, vorzugsweise kleiner gleich 1A. Vorzugsweise wird bei Erreichen des Erregerstromgrenzwerts im Wesentlichen noch kein Laststrom an das Bordnetz abgegeben (der Laststrom ist im Wesentlichen null).

Wenn man den Laststrom auf den Nennlaststrom bezieht, kann vorgesehen sein, dass der beim schnellen Erhöhen des Erregerstroms verwendete Erregerstromgrenzwert vorzugsweise einem Wert des Erregerstroms entspricht, bei dem der Generator lediglich einen Laststrom abgibt, der kleiner gleich 10 % des Nennlaststroms ist. Beispielsweise wird bei einem Nennlaststrom von 150 A der Erregerstromgrenzwert so gewählt, dass sich zum Ende der Phase des schnellen Erhöhens des Erregerstroms ein Laststrom kleiner gleich 15 A ergibt. Der Nennlaststrom von Generatoren für Kraftfahrzeuge ist in dem internationalen Standard ISO 8854 bei 6000 U/min, einer Generatorspannung von 13,5 V und einer Temperatur von 25°C festgelegt und bezieht sich auf den maximalen Dauerstrom, der bei den genannten Bedingungen ins Bordnetz abgegeben werden kann.

Wenn der Erregerstromgrenzwert für das schnelle Erhöhen des Erregerstroms so gewählt wird, dass bei Erreichen des Werts im Wesentlichen noch kein Laststrom abgegeben wird oder nur ein geringer Laststrom abgegeben wird, belastet der Generator den Antriebsmotor im Wesentlichen überhaupt nicht oder nur durch ein geringes Lastmoment.

Vorzugsweise wird bei der Zuschaltung des Generators der Erregerstrom zunächst ohne Load-Response-Control-Funktion über die Erregerstrombegrenzungsfunktion schlagartig (beispielsweise mit maximalem Tastverhältnis) auf einen Stromwert erhöht, bei der im Wesentlichen noch kein Laststrom abgegeben wird oder nur ein geringer Laststrom abgegeben wird.

Es ist von Vorteil, wenn der beim schnellen Erhöhen des Erregerstroms verwendete Erregerstromgrenzwert (also beispielsweise der erste Erregerstromgrenzwert) einem Wert des Erregerstroms entspricht, bei dem sich eine Phasenspannung ergibt (s. beispielsweise $U_{PH}$ in Fig. 1), bei der die Halbleiterschalter (Dioden oder MOSFETs) des Gleichrichters im Wesentlichen noch keinen nennenswerten Strom führen oder einen geringen Strom führen, der aber maximal 10 % des Nennbetrag des Stroms des Halbleiterschalters (Diodenstroms bzw. MOSFET-Stroms) entspricht.

Der Erregerstromgrenzwert kann beispielsweise gewählt werden, dass sich bei Erreichen des Erregerstromgrenzwerts eine Phasenspannung ergibt, bei der die Halbleiterschalter (z. B. Dioden oder MOSFETs) im Wesentlichen noch gesperrt bleiben oder in der Nähe des Spannungsmaximums (für die High-Side-Diode bzw. für den High-Side-MOSFET) bzw. des Spannungsminimums (für die Low-Side-Diode bzw. für den Low-Side-MOSFET) leitend werden.

Gemäß einer bevorzugten Ausführungsform wird für das schnelle Erhöhen des Erregerstroms ein Erregerstromgrenzwert verwendet, der einem Wert des Erregerstroms entspricht, bei dessen Erreichen eine Phasenspannung am Eingang des Gleichrichters hervorgerufen wird, deren Spitze-Spitze-Wert knapp (beispielsweise 0,5 V oder weniger als 0,5 V) unterhalb der Summe aus der Spannung am Ausgang des Gleichrichters (d. h. der Generatorspannung) und der zweifachen Flussspannung eines Halbleiterschalters des Gleichrichters ist oder deren Spitze-Spitze-Wert dieser Summe im Wesentlichen entspricht. Bei Annahme einer doppelten Diodenflussspannung von ungefähr 1,6 V wird beispielsweise ein Erregerstromgrenzwert gewählt, so dass der Spitze-Spitze-Wert der Phasenspannung etwas weniger als 1,6 V größer als die Spannung am Generatorausgang ist, beispielsweise 1,6 V - 0,5 V = 1,1 V größer als die Spannung am Generatorausgang.

Vorzugsweise wird bei der Zuschaltung des Generators der Erregerstrom zunächst ohne Load-Response-Control-Funktion über die Erregerstrombegrenzungsfunktion nahezu schlagartig (beispielsweise mit maximalem Tastverhältnis) auf einen Stromwert erhöht, bei dem eine Phasenspannung induziert wird, deren Spitze-Wert um etwas weniger als eine Diodenflussspannung größer als die Spannung am Ausgang des Generators ist oder deren Spitze-Wert um eine Diodenflussspannung größer als die Spannung am Ausgang des Generators ist.

Der Erregerstromgrenzwert, bei dem beispielsweise ein nennenswerter Laststromfluss entsteht oder bei dem gerade noch kein Laststromfluss auftritt, ist von dem Betriebszustand des Generators abhängig, beispielsweise von der Generator-Drehzahl, der aktuellen anliegenden Generatorspannung oder Temperatur.

Vorzugsweise wird seitens Steuergeräts, welches den beim schnellen Erhöhen des Erregerstroms verwendeten ersten Erregerstromgrenzwert dem Regler-Halbleiterbaustein mitteilt, dieser Erregerstromgrenzwert vorher in Abhängigkeit einer oder mehrerer die Größen bestimmt, die die Betriebsbedingungen des Generators beschreiben.

Beispielsweise wird der Erregerstromgrenzwert bestimmt in Abhängigkeit von:

- der Generator-Drehzahl oder einer proportionalen Drehzahl (beispielsweise der Drehzahl des Antriebsmotors) und/oder
- der Generatorspannung oder einer hierfür charakteristischen Spannung.

Der Erregerstromgrenzwert kann auch von der Temperatur abhängig sein.

Als für die Generatorspannung charakteristische Spannung kann beispielsweise die Spannung an der Fahrzeugbatterie oder eine irgendwo im Bordnetz gemessene Spannung zwischen der positiven Versorgung und der Masse verwendet werden. Als Generatorspannung kann ein gemessener Ist-Wert verwendet werden. Der Ist-Wert wird beispielsweise vom Regler-Halbleiterbaustein gemessen und über den LIN-Bus an das Steuergerät übertragen, wobei das Steuergerät dann den Erregerstromgrenzwert in Abhängigkeit des gemessenen Ist-Werts bestimmt.

Gemäß einer bevorzugten Ausführungsform wird der beim schnellen Erhöhen verwendete Erregerstromgrenzwert basierend auf der folgenden Gleichung berechnet:

$$I_{ERR,G} = a \cdot \left( \frac{U_{GEN} + c}{n_{GEN}} \right) + b \quad ,$$

Hierbei beschreibt $I_{ERR;G}$ den Erregerstromgrenzwert, $U_{GEN}$ die gleichgerichtete Generatorspannung hinter dem Gleichrichter (d. h. im Wesentlichen die Bordnetzspannung) und $n_{GEN}$ die Generator-Drehzahl. Die Größen a, b und c beschreiben Konstanten. Beispielsweise wird für die Konstante c die doppelte Flussspannung der Halbleiterschalter des Gleichrichters gewählt, d. h. $c = 2 \cdot U_d$. Die Konstanten a, b sind maschinenspezifische Parameter; b ist hierbei typischerweise negativ, da das Eisen im Rotor eine Remanenz aufweist (um eine induzierte Spannung von null zu erhalten, muss daher typischerweise ein negativer Erregerstrom eingestellt werden, dies ist jedoch im Allgemeinen mit derartigen Regler-Halbleiterbausteinen nicht möglich).

Ein zweiter Aspekt der Erfindung ist auf ein Steuergerät zum Ansteuern eines Regler-Halbleiterbausteins gerichtet. Das Steuergerät ist eingerichtet, einen Sollspannungswert, einen ersten Erregerstromgrenzwert und einen ersten Load-Response-Werts an den Regler-Halbleiterbaustein vorzugeben derart, dass unter Verwendung der Erregerstrombegrenzungsfunktion der Erregerstrom auf den seitens des Steuergeräts vorgegebenen ersten Erregerstromgrenzwert schnell erhöht wird. Hierbei gibt der erste Load-Response-Wert dem Regler-Halbleiterbaustein für die schnelle Erhöhung des Erregerstroms die Nichtverwendung der Load-Response-Control-Funktion oder in einer alternativen Realisierung die Verwendung der Load-Response-Control-Funktion mit schneller zeitlicher Zunahme des Tastverhältnisses vor. Nach Erreichen dieses Erregerstromgrenzwerts werden ein veränderter, zweiter Load-Response-Wert und ein veränderter, zweiter Erregerstromgrenzwert an den Regler-Halbleiterbaustein vorgegeben derart, dass unter Verwendung der Load-Response-Funktion der Erregerstrom weiter erhöht wird. Der veränderte, zweite Load-Response-Wert signalisiert dem Regler-Halbleiterbaustein für die weitere Erhöhung des Erregerstroms die Verwendung der Load-Response-Control-Funktion bzw. die Verwendung der Load-Response-Control-Funktion mit langsamerer zeitlicher Zunahme des Tastverhältnisses als vorher. Der veränderte, zweite Erregerstromgrenzwert signalisiert dem Regler-Halbleiterbaustein für die weitere Erhöhung des Erregerstroms die Nicht-Verwendung der Strombegrenzungsfunktion; in einer alternativen Realisierung ist der veränderte, zweite Erregerstromgrenzwert größer als der vorher vorgegebene erste Erregerstromgrenzwert.

Die vorstehenden Ausführungen zum erfindungsgemäßen Verfahren nach dem ersten Aspekt der Erfindung gelten in entsprechender Weise auch für das erfindungsgemäße Steuergerät nach dem zweiten Aspekt der Erfindung. An dieser Stelle nicht explizit beschriebene vorteilhafte Ausführungsbeispiele des erfindungsgemäßen Steuergeräts entsprechen den beschriebenen vorteilhaften Ausführungsbeispielen des erfindungsgemäßen Verfahrens. Hierbei werden zwei alternative Steuergeräte durch die Merkmale der Ansprüche 11 und 12 definiert.

Die Erfindung wird nachfolgend unter Zuhilfenahme auf die beigefügten Zeichnungen anhand eines Ausführungsbeispiels beschrieben. In diesen zeigen:

Fig. 1    einen konventionellen 14-V-Generator mit konventionellem LIN-Generatorregler-ASIC;

Fig. 2    den konventionellen typischen Zeitverlauf des Generatorstroms $I_{GEN}$ und des Erregerstroms $I_{ERR}$ beim Aktivieren des Generators im Fall eines konventionellen LIN-Generatorregler-ASIC mit aktivierter Load-Response-Funktion;

Fig. 3    ein Ausführungsbeispiel für das erfindungsgemäße Verfahren;

Fig. 4    beispielhafte schematische Zeitverläufe des Generatorstroms $I_{GEN}$, des Tastverhältnisses TV und des Erregerstroms $I_{ERR}$;

Fig. 5    beispielhafte gemessene Zeitverläufe der Phasenspannung $U_{PH}$, der über die Fahrzeugbatterie gehaltenen Spannung $U_{GEN}$ am Ausgang des Gleichrichters und des Tastverhältnisses TV;

Fig. 6    einen beispielhaften Zusammenhang zwischen dem Erregerstrom $I_{ERR}$ und der induzierten Spannung $U_{PH}$; und

Fig. 7    ein Ausführungsbeispiel eines erfindungsgemäßen Motorsteuergeräts.

Der in Fig. 1 dargestellte 14-V-Generator mit konventionellem LIN-Generatorregler-ASIC 4 wurde bereits in der Beschreibungseinleitung diskutiert; außerdem wurde in der Beschreibungseinleitung das Auftreten der Totzeit beim Aktivieren des Generators anhand von Fig. 2 erläutert.

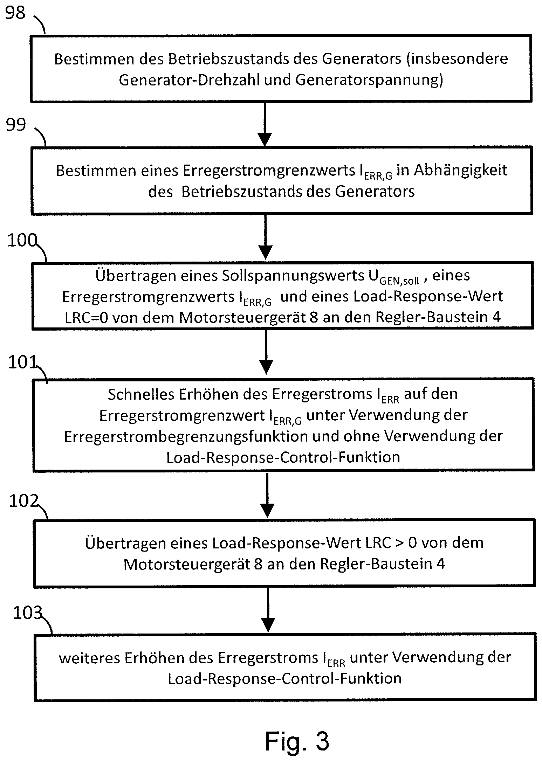

Ein beispielhaftes erfindungsgemäßes Verfahren zum Hochfahren des Erregerstroms, welches über das Motorsteuergerät 8 in Fig. 1 gesteuert wird, wird nachfolgend anhand von Fig. 3 erläutert.

In Schritt 98 werden Werte für den Betriebszustand des Generators beschreibende Größen bestimmt. Hierbei werden beispielsweise die Generator-Drehzahl und die Generatorspannung bestimmt.

In Schritt 99 wird ein Erregerstromgrenzwert $I_{ERR,G}$ in Abhängigkeit dieser den Betriebszustand beschreibender Werte bestimmt. Der verwendete Erregerstromgrenzwert $I_{ERR,G}$ wird beispielsweise in Abhängigkeit der über die Fahrzeugbatterie erzeugten Generatorspannung $U_{GEN,ist}$ am Ausgang des Generators und der Generator-Drehzahl $n_{GEN}$ oder der dazu proportionalen Motordrehzahl $n_{MOT}$ bestimmt.

Vorzugsweise wird vor dem Einschalten des Generators über Vorgabe eines entsprechenden Sollspannungsgrenzwerts $U_{GEN,soll}$ seitens des Motorsteuergeräts 8 die aktuelle Generator-Drehzahl oder Motor-Drehzahl und die aktuelle Generatorspannung $U_{GEN,ist}$ ausgelesen (s. Schritt 98) und in Abhängigkeit hiervon der Erregerstromgrenzwert $I_{ERR,G}$ bestimmt (s. Schritt 99), beispielsweise über eine Formel berechnet. Der Ist-Spannungswert der Generatorspannung $U_{GEN,ist}$ wird beispielsweise laufend vom Generator-Halbleiterbaustein 4 über den LIN-Bus dem Steuergerät 8 mitgeteilt (auch wenn der Generator noch keinen Strom liefert).

Die Bestimmung des Erregerstromgrenzwerts $I_{ERR,G}$ wird weiter unter noch genauer beschrieben.

Beim Aktiveren des Generators wird ein entsprechender Sollspannungswert $U_{GEN,soll} > U_{GEN,ist}$ zum Einschalten des Generators von dem Motorsteuergerät 8 an den Regler-Baustein 4 über den LIN-Bus übertragen, hierbei handelt es sich typischerweise um einen Sollspannungswert $U_{GEN,soll} > 10{,}6$ V, z. B. $U_{GEN,soll} = 15$ V. Außerdem wird der in Schritt 99 bestimmte Erregerstromgrenzwert $I_{ERR,G}$ (beispielsweise $I_{ERR,G} = 1{,}31$ A) und ein Load-Response-Wert LRC, der die Nichtverwendung der Load-Response-Control-Funktion vorgibt (typischerweise LRC = 0), von dem Motorsteuergerät 8 an den Regler-Baustein 4 über den LIN-Bus übertragen (s. Schritt 100 in Fig. 3). Das Senden des Sollspannungswerts $U_{GEN,soll}$ erfolgt vorzugsweise gemeinsam mit dem vorher berechneten Erregerstromgrenzwert $I_{ERR,G}$ und dem Load-Response-Wert LRC.

Der Erregerstromgrenzwert $I_{ERR,G}$ entspricht vorzugsweise einem Wert des Erregerstroms $I_{ERR}$, bei dem der Generator im Wesentlichen noch keinen Laststrom $I_{GEN}$ abgibt, so dass der Verbrennungsmotor noch nicht durch ein nennenswertes mechanisches Lastmoment seitens des Generators belastet wird. Dieser Erregerstromgrenzwert $I_{ERR,G}$ soll beispielsweise eine induzierte Spannung $U_{PH}$ erzeugen, deren Spitze-Spitze-Wert knapp unterhalb $U_{QEN}+ 2U_d$ liegt (beispielsweise um ungefähr 0,5 V unterhalb $U_{GEN} + 2U_d$ oder weniger als 0,5 V), wobei $U_d$ der Flussspannung eines Halbleiterschalters im Gleichrichter entspricht (beispielsweise $U_d$ = 0,8 V). Die Halbleiter sollen vorzugsweise also noch knapp nicht leiten, der Generator noch nicht "am Netz" sein.

Der berechnete Erregerstromgrenzwert $I_{ERR,G}$ und der Load-Response-Wert LRC = 0 werden dem Regler-Baustein 4 für eine bestimmte Zeit (z. B. 200 ms) zusammen mit einem Sollspannungsgrenzwert $U_{GEN,Soll} > U_{GEN,ist}$ vorgegeben.

Aufgrund der Vorgaben wird seitens des Regler-Bausteins 4 der Erregerstrom $I_{ERR}$ unter Verwendung der Erregerstrombegrenzungsfunktion und ohne Verwendung der Load-Response-Control-Funktion schnell auf den Erregerstromgrenzwert $I_{ERR,G}$ erhöht (s. Schritt 101 in Fig. 3). Bei der Generatorzuschaltung wird also der Erregerstrom $I_{ERR}$ zunächst ohne Load-Response-Control-Funktion über die Erregerstrombegrenzungsfunktion fast schlagartig auf den Erregerstromgrenzwert $I_{ERR,G}$ erhöht.

Der Regler-Baustein 4 versucht den vorgegebenen Erregerstromgrenzwert $I_{ERR,G}$ in möglichst kurzer Zeit zu erreichen. Dafür wird das Tastverhältnis TV der Endstufe 6 zu Beginn des schnellen Erregerstromerhöhens fast schlagartig auf den Maximalwert (TV = 100 %) erhöht. Das Tastverhältnis TV bleibt eine kurze Zeit (z. B. 30 ms) im Wesentlichen auf diesem Maximalwert und reduziert sich dann auf ein im wesentlichen konstantes Tastverhältnis TV (z. B. TV = 43 %), der den geforderten Erregerstromwert $I_{ERR}$ = $I_{ERR,G}$ zur Folge hat. Zusammen mit dem Anstieg des Erregerstromes steigt auch die induzierte Spannung $U_{PH}$.

Beispielsweise ca. 200 ms nach dem Beginn des schnellen Erhöhens des Erregerstroms $I_{ERR}$ hat sich der gewünschte Erregerstrom $I_{ERR}$ = $I_{ERR,G}$ im Läufer der Synchronmaschine 9 eingestellt und das Tastverhältnis TV des Regler-Bausteins 4 ist stabil. Diese Zeitdauer ist abhängig von Läuferzeitkonstante. Hierbei ist der Generator vorzugsweise noch knapp "nicht am Netz" und erzeugt kein nennenswertes Lastmoment (beispielsweise ein geringes Moment aufgrund der Eisenverluste).

Zeitlich nach Erreichen des Erregerstromgrenzwerts $I_{ERR,G}$ wird der Erregerstrom $I_{ERR}$ weiter erhöht (s. Schritt 103), jedoch im Unterschied zu vorher jetzt unter Verwendung der Load-Response-Funktion. Hierzu wird gemäß Schritt 102 ein veränderter Load-Response-Wert LRC > 0 (beispielsweise LRC = 9s) von dem Motorsteuergerät 8 an den Regler-Baustein 4 übertragen. Hierdurch wird der Regler-Baustein 4 auf einen Betrieb mit Load-Response-Control-Funktion umgeschaltet. Außerdem wird die Erregerstrombegrenzungsfunktion ausgeschaltet, beispielsweise durch Vorgabe eines Erregerstromgrenzwerts $I_{ERR,G}$ = 0 seitens des Motorsteuergeräts 8, der dem Regler-Baustein die Deaktivierung der Erregerstrombegrenzungsfunktion vorgibt. Hierdurch kann der Erregerstrom $I_{ERR}$ ausgehend von dem Erregerstromgrenzwert $I_{ERR,G}$ weiter steigen. Alternativ könnte die Erregerstrombegrenzungsfunktion belassen werden, jedoch mit einem durch das Motorsteuergerät vorgegebenen größeren Erregerstromgrenzwert, der ein weiteres Ansteigen des Erregerstroms erlaubt.

Beim weiteren Erhöhen des Erregerstorms $I_{ERR}$ erhöht der Regler-Baustein 4 entsprechend dem vorgegebenen Load-Response-Wert LRC kontinuierlich das Tastverhältnis TV.

Die Ausgangsbasis für das weitere Erhöhen des Erregerstromgrenzwerts unter Verwendung der Load-Response-Control-Funktion ist hier aber nicht der Wert TV = 0 % (wie das im Stand der Technik bei Hochfahren des Erregerstroms unter Verwendung der Load-Response-Control-Funktion der Fall ist), sondern das aktuelle Tastverhältnis TV (z. B. TV = 43 %) unmittelbar vor dem weiteren Erhöhen des Erregerstroms $I_{ERR}$. Beim weiteren Erhöhen des Erregerstroms $I_{ERR}$ wird der Generator sanft "an Netz" geführt und liefert in Abhängigkeit des gewählten Load-Response-Werts LRC zunehmend mehr Generatorstrom $I_{GEN}$.

Dadurch, dass beim schnellen Erhöhen mittels der Strombegrenzungsfunktion schnell der Erregerstromgrenzwert $I_{ERR,G}$ ohne Verwendung der Load-Response-Control-Funktion erreicht werden kann, kann die in der Beschreibungseinleitung beschriebene Totzeit deutlich reduziert werden, so dass der Generator bei einem Motorstart deutlich früher am Netz ist und Strom ins Bordnetz liefern kann.

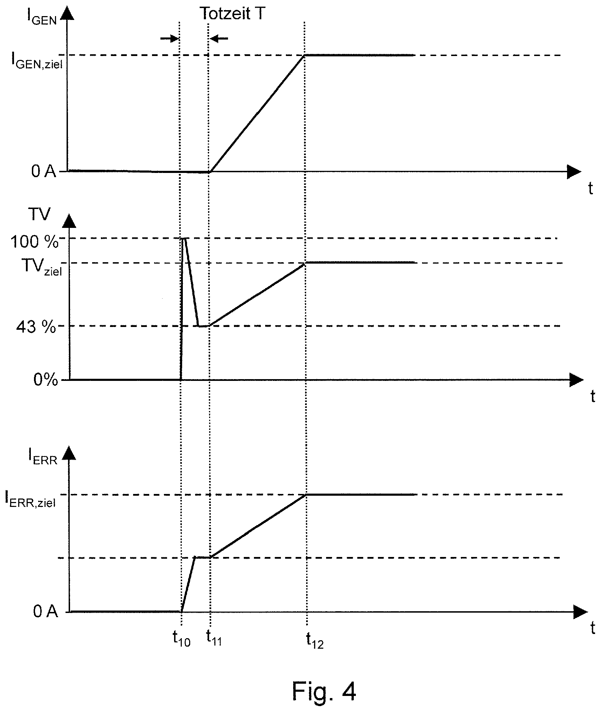

Fig. 4 zeigt beispielhafte schematische Zeitverläufe des Generatorstroms $I_{GEN}$, des Tastverhältnisses TV und des Erregerstroms $I_{ERR}$ bei Verwendung des vorstehend beschriebenen Verfahrens.

Zum Zeitpunkt $t_{10}$ wird die Aktivierung des Generators beispielsweise seitens des Motorsteuergeräts 8 angefordert (beispielsweise durch ein Senden einer Sollspannungsvorgabe größer 10,6 V über den LIN-Bus). Gleichzeitig werden ein Load-Response-Wert LRC = 0 und der Erregerstromgrenzwert $I_{ERR,G}$ vorgegeben, so dass der Generator-Halbleiterbaustein 4 beginnt, den Erregerstrom $I_{ERR}$ mit schneller Änderungsgeschwindigkeit auf den Erregerstromgrenzwert $I_{ERR,G}$ zu erhöhen, da die Load-Response-Control-Funktion deaktiviert ist. Das Tastverhältnis springt fast schlagartig auf TV = 100 %. Das Tastverhältnis TV bleibt eine kurze Zeit im Wesentlichen auf diesem Maximalwert TV = 100 % und reduziert sich dann auf ein im wesentlichen konstantes Tastverhältnis TV (z. B. TV = 43 %), der den geforderten Erregerstromwert $I_{ERR}$ = $I_{ERR,G}$ zur Folge hat. Nach Erreichen des Erregerstromgrenzwerts $I_{ERR,G}$ wird der Erregerstrom $I_{ERR}$ zum Zeitpunkt $t_{11}$ unter Verwendung der Load-Response-Control-Funktion weiter erhöht, jedoch langsamer als vorher. Der Generatorstrom $I_{GEN}$ steigt jetzt an, bis der Zielwert $I_{GEN,ziel}$ zum Zeitpunkt $t_{12}$ erreicht wird.

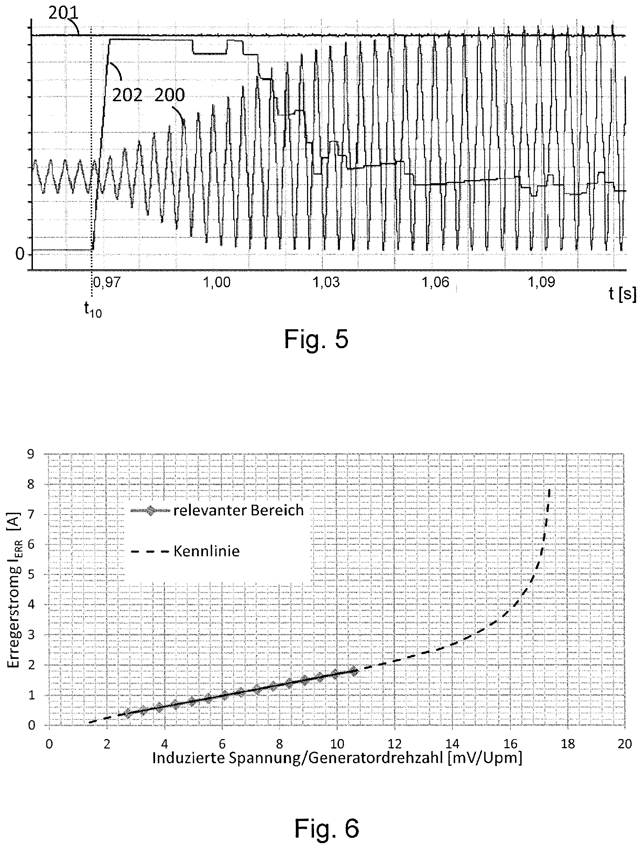

Fig. 5 zeigt beispielhafte gemessene Zeitverläufe der Phasenspannung $U_{PH}$ (s. Verlauf 200), der über die Fahrzeugbatterie gehaltenen Bordnetzspannung $U_{GEN}$ am Ausgang des Gleichrichters (s. Verlauf 201 mit einem Spannungswert von ungefähr 12,5 V) und des Tastverhältnisses TV (s. den Verlauf 202) in der Zeitphase kurz vor dem schnellen Erhöhen des Erregerstroms $I_{ERR}$ und während des schnellen Erhöhens des Erregerstroms $I_{ERR}$. Zum Zeitpunkt $t_{10}$ wird das Tastverhältnis TV fast schlagartig auf 100 % erhöht (s. den Verlauf 202) und verbleibt hierfür eine kurze Zeit (ca. 30 ms). Hierdurch wird der Erregerstrom $I_{ERR}$ erhöht und somit auch die Amplitude der induzierten Phasenspannung $U_{PH}$. Dann stabilisiert sich das Tastverhältnis auf einen im Wesentlichen konstanten Wert, der den geforderten Erregerstromgrenzwert $I_{ERR,G}$ zur Folge hat. Es wird vorzugsweise ein Spitze-Spitze-Wert der induzierten Spannung $U_{PH}$ erreicht, der knapp unterhalb von $U_{GEN} + 2 \cdot U_d$ liegt, so dass die Halbleiterschalter des Gleichrichter knapp nicht leiten und der Generator noch keinen Generatorstrom ins Bordnetz liefert.

Nachfolgend wird ein Ausführungsbeispiel zur Bestimmung des Erregerstromgrenzwerts $I_{ERR,G}$ diskutiert, der beim schnellen Erhöhen des Erregerstroms $I_{ERR}$ verwendet wird. Der Erregerstromgrenzwert $I_{ERR,G}$ wird bei diesem Beispiel in Abhängigkeit der Generator-Drehzahl $n_{GEN}$ oder einer hierzu proportionalen Drehzahl, insbesondere der Motordrehzahl $n_{MOT}$, und in Abhängigkeit der Generatorspannung $U_{GEN}$ oder einer hierfür charakteristischen Spannung berechnet.

Hierbei kann ausgenutzt werden, dass sich die induzierte Spannung $U_{PH}$ in einem relevanten Betriebsbereich linear zum Erregerstrom $I_{ERR}$ verhält. Als relevanter Betriebsbereich werden Erregerstromwerte betrachtet, die im Generatordrehzahlbereich von beispielsweise 1500 bis 4000 U/min zu einer induzierten Spannung $U_{PH}$ von 11 bis 15V führen. Der Erregerstrom $I_{ERR}$ kann in diesem Bereich über eine Geradengleichung y = a·x + b dargestellt werden.

In Fig. 6 ist ein beispielhafter lineare Zusammenhang zwischen dem Erregerstrom $I_{ERR}$ auf der Y-Achse (und damit des einzustellenden Erregerstromgrenzwerts $I_{ERR,G}$) und der induzierten Spannung $U_{PH}$ in dem relevanten Bereich dargestellt, in dem der Erregerstrom $I_{ERR}$ als lineare Funktion der induzierten Spannung $U_{PH}$ dargestellt werden kann. Bei der X-Achse handelt es sich um den Quotienten aus induzierter Spannung $U_{PH}$ und Generatordrehzahl. Für die in Fig. 6 dargestellte beispielhafte Gerade ergibt sich folgende Geradengleichung:

$$y = a \cdot x + b = 0{,}1785 \ \text{A/(mV/Upm)} \cdot x + (-0{,}0836) \ \text{A}$$

Hierbei beschreiben a die Steigung der Gerade im relevanten Bereich und b den Y-Achsenabschnitt, an dem Gerade die Y-Achse bei einer gedachten Verlängerung schneidet. Der Verlauf hängt von dem jeweils verwendeten Generator ab. Die Größen a und b sind also maschinenspezifische Parameter und können für den verwendeten Generator messtechnisch bestimmt werden.

Basierend auf dieser linearen Geradengleichung für den Erregerstrom $I_{ERR}$ lässt sich der Erregerstromgrenzwert $I_{ERR,G}$ in Abhängigkeit der bekannten Größen Generatorspannung $U_{GEN}$ und Generatordrehzahl in folgender Weise bestimmen:

$$I_{ERR.G} = a \cdot \left( \frac{U_{GEN} - 2 \cdot U_d}{n_{GEN}} \right) + b$$

In dem vorliegen Beispiel gilt für die Steigung a = 0,1785 A/(mV/Upm) und für den Y-Achsenabschnitt b = -0,0836 A. Die Halbleiterschalter-Flussspannung $U_d$ des Gleichrichters (bsw. Diodenflussspannung) beträgt beispielsweise 0,8 V. Hierbei kann die Generatordrehzahl $n_{GEN}$ zur Berechnung auch als Funktion der Motordrehzahl $n_{MOT}$ dargestellt werden mit $n_{GEN} = n_{MOT} \cdot \ddot{U}$. Die Riemenantriebsübersetzung ist hier mit Ü bezeichnet (beispielsweise Ü = 3). Die maschinenspezifischen Parameter a, b können im Steuergerät 8, welches den Erregergrenzstromwert $I_{ERR,G}$ bestimmt, abgelegt werden. Auch die doppelte Flussspannung $2U_d$ kann im Steuergerät 8 abgelegt werden und als Applikationsparameter genutzt werden. Anstatt den Erregerstromgrenzwert $I_{ERR,G}$ anhand der vorstehenden oder einer ähnlichen Gleichung zur berechnen, können natürlich auch die Erregerstromgrenzwerte anhand eines vorausberechneten Kennfelds bestimmt werden.

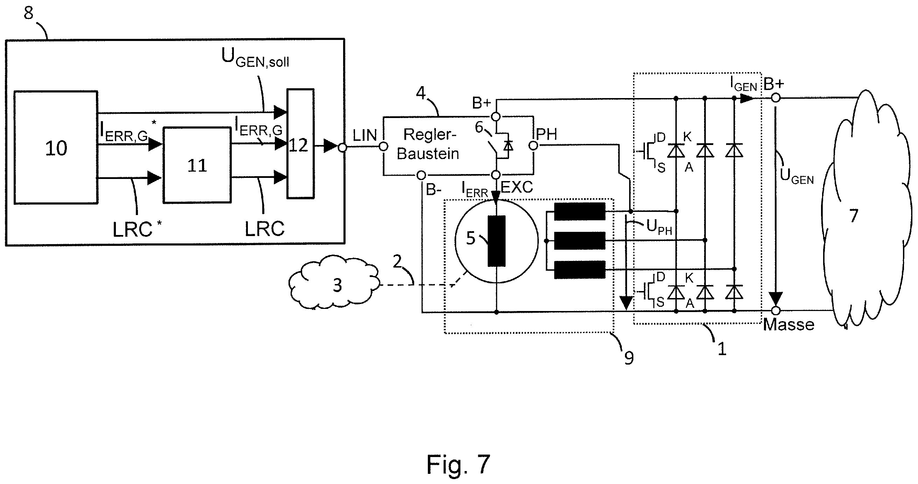

Fig. 7 zeigt ein beispielhaftes Ausführungsbeispiel eines erfindungsgemäßen Steuergeräts 8, welches den konventionellen Regler-Halbleiterbaustein 4 aus Fig. 1 ansteuert. Bei dem Steuergerät 8 handelt es sich vorzugsweise um ein elektronisches Motorsteuergerät zur Steuerung des Antriebsmotors 3 des Kraftfahrzeugs. Das Motorsteuergerät 8 umfasst einen ersten Funktionsblock 10, welcher den Sollspannungswert $U_{GEN,soll}$ für die Spannungsregelung, den Load-Response-Wert LRC* für die Load-Response-Control-Funktion und den Erregerstromgrenzwert $I_{ERR.G}$* für die Erregerstrombegrenzungsfunktion bestimmt. In einem zweiten Funktionsblock 11 erfolgt gegebenenfalls eine Modifikation des Load-Response-Werts und des Erregerstromgrenzwerts. Die Modifikation erfolgt hierbei im Wesentlichen in dem Zeitraum unmittelbar vor Beginn der schnellen Erhöhung des Erregerstroms auf den Erregerstromgrenzwerts bis unmittelbar vor der weiteren Erhöhung des Erregerstroms $I_{ERR}$ unter Verwendung der Load-Response-Funktion. Ansonsten werden die von dem Funktionsblock 10 bestimmten Werte $I_{ERR,G}$ und LRC ohne Modifikation über den Interface-Funktionsblock 12 an den Regler-Halbleiterbaustein 4 weitergeleitet. Im Block 11 erfolgt auch die vorstehend beschriebene Bestimmung des Erregerstromgrenzwerts $I_{ERR,G}$ in Abhängigkeit beispielsweise der Generatorspannung $U_{GEN}$ und der Generator- oder Motordrehzahl. Dieser in Block 11 bestimmte Erregerstromgrenzwert $I_{ERR,G}$ wird dem Regler-Baustein 4 zusammen mit LRC = 0 für eine festgelegte Zeit (beispielsweise 200 ms) anstelle der von dem Block 10 vorgegebenen Werte $I_{ERR,G}{}^*$ und $LRC^*$ vorgegeben. Der Sollspannungswert $U_{GEN,soll}$, der Load-Response-Wert LRC und der Erregerstromgrenzwert $I_{ERR,G}$ werden in dem Interface-Funktionsblock 12 in ein LIN-Signal eingebunden und über den LIN-Bus an den Regler-Halbleiterbaustein 4 geleitet.

In Tabelle 1 sind beispielhafte Werte für in Fig. 7 dargestellte Größen $U_{GEN,soll}$ $I_{ERR,G}$, LRC, $LRC^*$ über der Zeit t gelistet. Ferner sind der Zustand, die Ist-Generatorspannung $U_{GEN,ist}$, der Ist-Erregerstrom $I_{ERR}$, das Tastverhältnis TV, die Motordrehzahl $n_{MOT}$, der Generatorlaststrom $I_{GEN}$ und die Phasenspannung $U_{PH}$ über der Zeit t gelistet. Zum Zeitpunkt t = -0,5 s in Tabelle 1 wird der Motor 3 gestartet, beispielsweise mittels eine Motor-Start-Stopp-Automatik. Ab dem Zeitpunkt t = 0 s beginnt die Phase des schnellen Erhöhens des Erregerstroms $I_{ERR}$ ohne Verwendung der Load-Response-Control-Funktion ("Erhöhen $I_{ERR}$ ohne LRC") über die Strombegrenzungsfunktion. Hierzu wird dem Regler-Halbleiterbaustein 4 ein Generatorsollwert $U_{GEN,soll}$ > 10,6 V und der im Funktionsblock 11 bestimmte Erregerstromgrenzwert $I_{ERR,G} \geq 0$ (hier $I_{ERR,G}$ = 1,31 A) vorgegeben. Für den vom Funktionsblock 10 vorgegebenen Erregerstromgrenzwert $I_{ERR,G}{}^*$ gilt die gesamte Zeit: $I_{ERR,G}{}^*$ =0. Der vom Funktionsblock 10 vorgegebene Erregerstromgrenzwert $I_{ERR,G}{}^*$ = 0 wird also vom Funktionsblock 11 in den Erregerstromgrenzwert $I_{ERR,G}$ = 1,31 A modifiziert. Ferner wird der vom Funktionsblock 10 bereitgestellte Load-Response-Wert $LRC^* \neq 0$ (hier $LRC^*$ = 9s) in dem Funktionsblock 11 in den Load-Response-Wert LRC = 0s modifiziert, so dass der Regler-Halbleiterbaustein 4 die Load-Response-Control-Funktion nicht verwendet. Das Tastverhältnis TV springt dadurch nahezu schlagartig auf 100 % und der Erregerstrom $I_{ERR}$ erhöht sich. Kurz vor t = 0,2 s hat sich das Tastverhältnis TV auf einen dem Erregerstromgrenzwert $I_{ERR,G}$ entsprechenden Wert (hier TV = 43 %) stabilisiert und der Peak-Peak-Wert der induzierten Phasenspannung $U_{PH}$ liegt leicht unterhalb $U_{GEN,ist}$ + 2·$U_d$. Der Generatorausgangsstrom $I_{GEN}$ beträgt im Wesentlichen null. Zum Zeitpunkt t = 0,2 s ist die Phase des schnellen Erhöhens des Erregerstroms abgeschlossen und der Load-Response-Wert $LRC^*$ = 9s des Funktionsblocks 10 wird vom Funktionsblock 11 ohne Modifikation als LRC = 9s weitergeleitet, so dass die weitere Erhöhung des Erregerstroms $I_{ERR}$ mit aktivierter Load-Response-Funktion durchgeführt wird (s. "LRC" in Spalte Zustand). Die Erregerstrombegrenzung wird durch $I_{ERR,G}$ = 0 ausgeschaltet.

Im Beispiel von Tabelle 1 ist der Erregerstromgrenzwert $I_{ERR,G}$ für t = 0 s und t = 0,1s gleich; es wäre aber auch denkbar, den Erregerstromgrenzwert $I_{ERR,G}$ während der Phase des schnellen Erhöhens des Erregerstorms $I_{ERR}$ zu verändern (da sich beispielsweise die Motordrehzahl $n_{MOT}$ und/oder die Generatorspannung ändert).

Tabelle 1

| Zustand | Zeit t | aus Block 10 | | aus Regler 4 via LIN-Bus | | | vom Motor 3 / Steuergerät 8 | aus Block 11 (an den Regler 4 via LIN) | | $I_{GEN}$ | $U_{PH}$ |
|---|---|---|---|---|---|---|---|---|---|---|---|
| | | $U_{GEN,soll}$ | LRC* | $U_{GEN,ist}$ | $I_{ERR}$ | TV | $n_{MOT}$ | $I_{ERR,G}$ | LRC | | |
| Motor-Aus | < -0,5s | 10,6V | | z.B. 12,75V | 0 | 0 | 0 Upm | | | 0 | $0,5V_{pp}$ |
| Start des Motors | -0,5s | 10,6V | | z.B. 9,72V | 0 | 0 | z.B. 0..720Upm | | | 0 | $0,5V_{pp}$ |
| Erhöhen $I_{ERR}$ ohne LRC | 0s | 15V | 9s | z.B. 12,63V | 0 | 100% | z.B. 613Upm | 1,31A | 0 | 0 | $0,5V_{pp}$ |
| Erhöhen $I_{ERR}$ ohne LRC | 0,1s | 15V | 9s | z.B. 12,49V | 0,82A | 90% | z.B. 625Upm | 1,31A | 0 | 0 | $9,27 V_{pp}$ |
| LRC | 0,2s | 15V | 9s | z.B. 12,30V | 1,2A | 43% | z.B. 620Upm | 0 | 9s | 0 | $13,54V_{pp}$ |
| LRC | 1,2s | 15V | 9s | 12,29V | 1,5A | 54% | 620Upm | 0 | 9s | z.B. 10A | |
| LRC | 2,2s | 15V | 9s | 12,31V | 1,8A | 65% | 620Upm | 0 | 9s | 17A | |
| LRC | 3,2s | 15V | 9s | 12,52V | 2,1A | 76% | 620Upm | 0 | 9s | 22A | |
| LRC | 4,2s | 15V | 9s | 13,11V | 2,5A | 87% | 620Upm | 0 | 9s | 38A | |
| LRC | 5,2s | 15V | 9s | 14,37V | 3,2A | 98% | 620Upm | 0 | 9s | 50A | |
| Vollast | 6,2s | 15V | 9s | 14,80V | 3,4A | 100% | 620Upm | 0 | 9s | 63A | |
| $U_{GEN,ist}$ = $U_{GEN,soll}$ | 7,2s | 15V | 9s | 15,00V | 3,5A | 100% | 620Upm | 0 | 9s | 72A | |
| Regelung | 8,2s | 15V | 9s | 15,00V | 2,1A | 76% | 620Upm | 0 | 9s | 22A | |
| Regelung | 9,2s | 15V | 9s | 15,00V | 2,1A | 76% | 620Upm | 0 | 9s | 22A | |

EP 2 987 237 B1

**Patentansprüche**

1. Verfahren zum Hochfahren des Erregerstroms ($I_{ERR}$) eines an ein Bordnetz (7) eines Kraftfahrzeug angeschlossenen und über einen Antriebsmotor des Kraftfahrzeugs angetriebenen Mehrphasenwechselstrom-Generators beim Aktivieren des Generators, wobei

- dem Generator ein Gleichrichter (1) zum Erzeugen einer gleichgerichteten Spannung ($U_{GEN}$) nachgeschaltet ist,
- die gleichgerichtete Generatorspannung ($U_{GEN}$) über einen Regler-Halbleiterbaustein (4) geregelt wird, wobei der Regler-Halbleiterbaustein (4)

- zur Regelung der Generatorspannung den Erregerstrom ($I_{ERR}$) mittels Einstellung eines den Erregerstrom bestimmenden Tastverhältnisses (TV) einstellt,
- zur Entgegennahme eines Erregerstromgrenzwerts ($I_{ERR,G}$) und eines Load-Response-Werts (LRC) von einem mit dem Regler-Halbleiterbaustein (4) verbundenen Steuergerät (8) eingerichtet ist,
- eine Erregerstrombegrenzungsfunktion zur Begrenzung des Erregerstroms auf den vorgegebenen Erregerstromgrenzwert ($I_{ERR,G}$) umfasst, und
- eine Load-Response-Control-Funktion zur Begrenzung der zeitlichen Zunahme des Tastverhältnisses (TV) umfasst, wobei die Load-Response-Control-Funktion die Begrenzung der zeitlichen Zunahme des Tastverhältnisses (TV) unter Berücksichtigung des Load-Response-Werts (LRC) durchführt,

wobei das Verfahren folgende Schritte umfasst:

- ausgehend von einem Erregerstrom von null, erstes Erhöhen (101) des Erregerstroms ($I_{ERR}$) auf einen Erregerstromgrenzwert ($I_{ERR,G}$)

- unter Verwendung der Erregerstrombegrenzungsfunktion und
- unter Nichtverwendung der Load-Response-Control-Funktion,

wobei zum ersten Erhöhen des Erregerstroms ($I_{ERR}$) ein erster Erregerstromgrenzwert und ein erster Load-Response-Wert seitens des Steuergeräts (8) dem Halbleiterbaustein (4) vorgegeben werden, so dass unter Verwendung der Erregerstrombegrenzungsfunktion der Erregerstrom auf den seitens des Steuergeräts (8) vorgegebenen ersten Erregerstromgrenzwert erhöht wird, und wobei der erste Load-Response-Wert dem Regler-Halbleiterbaustein (4) für die erste Erhöhung des Erregerstroms die Nichtverwendung der Load-Response-Control-Funktion vorgibt,
- nach Erreichen dieses Erregerstromgrenzwerts ($I_{ERR,G}$), weiteres Erhöhen (103) des Erregerstroms ($I_{ERR}$) unter Verwendung der Load-Response-Control-Funktion, wobei zum weiteren Erhöhen des Erregerstroms ein veränderter, zweiter Load-Response-Wert und ein veränderter, zweiter Erregerstromgrenzwert seitens des Steuergeräts (8) dem Regler-Halbleiterbaustein (4) vorgegeben werden, so dass unter Verwendung der Load-Response-Funktion der Erregerstrom weiter erhöht wird, und wobei

- der veränderte, zweite Load-Response-Wert dem Regler-Halbleiterbaustein (4) für die weitere Erhöhung des Erregerstroms ($I_{ERR}$) die Verwendung der Load-Response-Control-Funktion vorgibt und
- der veränderte, zweite Erregerstromgrenzwert dem Regler-Halbleiterbaustein (4) für die weitere Erhöhung des Erregerstroms ($I_{ERR}$) die Nicht-Verwendung der Strombegrenzungsfunktion vorgibt oder der veränderte, zweite Erregerstromgrenzwert größer ist als der vorher vorgegebene erste Erregerstromgrenzwert.

2. Verfahren zum Hochfahren des Erregerstroms ($I_{ERR}$) eines an ein Bordnetz (7) eines Kraftfahrzeug angeschlossenen und über einen Antriebsmotor des Kraftfahrzeugs angetriebenen Mehrphasenwechselstrom-Generators beim Aktivieren des Generators, wobei

- dem Generator ein Gleichrichter (1) zum Erzeugen einer gleichgerichteten Spannung ($U_{GEN}$) nachgeschaltet ist,
- die gleichgerichtete Generatorspannung ($U_{GEN}$) über einen Regler-Halbleiterbaustein (4) geregelt wird, wobei der Regler-Halbleiterbaustein (4)

- zur Regelung der Generatorspannung den Erregerstrom ($I_{ERR}$) mittels Einstellung eines den Erregerstrom bestimmenden Tastverhältnisses (TV) einstellt,

- zur Entgegennahme eines Erregerstromgrenzwerts ($I_{ERR,G}$) und eines Load-Response-Werts (LRC) von einem mit dem Regler-Halbleiterbaustein (4) verbundenen Steuergerät (8) eingerichtet ist,
- eine Erregerstrombegrenzungsfunktion zur Begrenzung des Erregerstroms auf den vorgegebenen Erregerstromgrenzwert ($I_{ERR,G}$) umfasst, und
- eine Load-Response-Control-Funktion zur Begrenzung der zeitlichen Zunahme des Tastverhältnisses (TV) umfasst, wobei die Load-Response-Control-Funktion die Begrenzung der zeitlichen Zunahme des Tastverhältnisses (TV) unter Berücksichtigung des Load-Response-Werts (LRC) durchführt,

wobei das Verfahren die folgenden Schritte umfasst:

- erstes Erhöhen (101) des Erregerstroms ($I_{ERR}$) auf einen Erregerstromgrenzwert ($I_{ERR,G}$)

- unter Verwendung der Erregerstrombegrenzungsfunktion und
- unter Verwendung der Load-Response-Funktion mit schneller zeitlicher Zunahme des Tastverhältnisses,

wobei zum ersten Erhöhen des Erregerstroms ($I_{ERR}$) ein erster Erregerstromgrenzwert und ein erster Load-Response-Wert seitens des Steuergeräts (8) dem Halbleiterbaustein (4) vorgegeben werden, so dass unter Verwendung der Erregerstrombegrenzungsfunktion der Erregerstrom auf den seitens des Steuergeräts (8) vorgegebenen ersten Erregerstromgrenzwert erhöht wird, und wobei der erste Load-Response-Wert dem Regler-Halbleiterbaustein (4) für die erste Erhöhung des Erregerstroms die Verwendung der Load-Response-Control-Funktion mit schneller zeitlicher Zunahme des Tastverhältnisses vorgibt,
- nach Erreichen dieses Erregerstromgrenzwerts ($I_{ERR,G}$), weiteres Erhöhen (103) des Erregerstroms ($I_{ERR}$) unter Verwendung der Load-Response-Control-Funktion mit langsamerer zeitlicher Zunahme des Tastverhältnisses (TV) als beim ersten Erhöhen (101) des Erregerstroms, wobei zum weiteren Erhöhen des Erregerstroms ein veränderter, zweiter Load-Response-Wert und ein veränderter, zweiter Erregerstromgrenzwert seitens des Steuergeräts (8) dem Regler-Halbleiterbaustein (4) vorgegeben werden, so dass unter Verwendung der Load-Response-Funktion der Erregerstrom weiter erhöht wird, und wobei

- der veränderte, zweite Load-Response-Wert dem Regler-Halbleiterbaustein (4) für die weitere Erhöhung des Erregerstroms ($I_{ERR}$) die Verwendung der Load-Response-Control-Funktion mit langsamerer zeitlicher Zunahme des Tastverhältnisses als vorher vorgibt und
- der veränderte, zweite Erregerstromgrenzwert dem Regler-Halbleiterbaustein (4) für die weitere Erhöhung des Erregerstroms ($I_{ERR}$) die Nicht-Verwendung der Strombegrenzungsfunktion vorgibt oder der veränderte, zweite Erregerstromgrenzwert größer ist als der vorher vorgegebene erste Erregerstromgrenzwert.

3. Verfahren nach einem der vorhergehenden Ansprüche, ferner umfassend den Schritt:

- Bestimmen des beim erste Erhöhen des Erregerstroms verwendeten Erregerstromgrenzwerts ($I_{ERR,G}$) in Abhängigkeit einer oder mehreren den Betriebszustand des Generators beschreibenden Größen.

4. Verfahren nach Anspruch 3, wobei der Erregerstromgrenzwert ($I_{ERR,G}$) in Abhängigkeit der Generator-Drehzahl ($n_{GEN}$) oder einer hierzu proportionalen Drehzahl bestimmt wird.

5. Verfahren nach einem der Ansprüche 3 oder 4, wobei der Erregerstromgrenzwert ($I_{ERR,G}$) in Abhängigkeit der Generatorspannung ($U_{GEN}$) oder einer hierfür charakteristischen Spannung bestimmt wird.

6. Verfahren nach einem Ansprüche 3-5, wobei
der Erregerstromgrenzwert ($I_{ERR,G}$) in Abhängigkeit,

- der Generator-Drehzahl ($n_{GEN}$) oder einer hierzu proportionalen Drehzahl und
- in Abhängigkeit der Generatorspannung ($U_{GEN}$) oder einer hierfür charakteristischen Spannung

bestimmt wird.

7. Verfahren nach Anspruch 6, wobei der beim ersten Erhöhen des Erregerstroms verwendete Erregerstromgrenzwert ($I_{ERR,G}$) basierend auf der folgenden Gleichung bestimmt wird:

$$I_{ERR,G} = a \cdot \left( \frac{U_{GEN} + c}{nn_{GEN}} \right) + b \quad,$$

wobei $I_{ERR,G}$ der Erregerstromgrenzwert, $U_{GEN}$ die Generatorspannung oder eine hierfür charakteristische Spannung, $n_{GEN}$ die Generator-Drehzahl und a, b und c Konstante beschreiben.

**8.** Verfahren nach einem der vorhergehenden Ansprüche, wobei der beim ersten Erhöhen des Erregerstroms verwendete Erregerstromgrenzwert ($I_{ERR,G}$) einem Wert des Erregerstroms entspricht, bei dem der Generator

- im Wesentlichen noch keinen Laststrom abgibt,
- einen Laststrom kleiner gleich 15 A abgibt oder
- einen Laststrom, der kleiner gleich 10 % des Nennlaststroms ist, abgibt.

**9.** Verfahren nach einem der vorhergehenden Ansprüche, wobei der beim ersten Erhöhen des Erregerstroms verwendete Erregerstromgrenzwert ($I_{ERR,G}$) einem Wert des Erregerstroms entspricht, der eine Phasenspannung ($U_{PH}$) am Eingang des Gleichrichters (1) hervorruft, deren Spitze-Spitze-Wert knapp unterhalb der Summe aus der Spannung ($U_{GEN}$) am Ausgang des Gleichrichters und der zweifachen Flussspannung ($U_d$) eines Halbleiterschalters des Gleichrichters (1) ist oder deren Spitze-Spitze-Wert dieser Summe im Wesentlichen entspricht.

**10.** Verfahren nach einem der vorhergehenden Ansprüche, wobei die Zeitdauer zwischen

- dem Beginn des ersten Erhöhens des Erregerstroms und
- dem Beginn des weiteren Erhöhens des Erregerstroms im Bereich von 50 ms bis 400 ms liegt, insbesondere bei ungefähr 200 ms.

**11.** Steuergerät zum Ansteuern eines Regler-Halbleiterbausteins (4) zur Regelung einer über einen Gleichrichter (1) gleichgerichteten Generatorspannung ($U_{GEN}$) eines an ein Bordnetz (7) eines Kraftfahrzeug angeschlossenen und über einen Antriebsmotor des Kraftfahrzeugs angetriebenen Mehrphasenwechselstrom-Generators, wobei der Regler-Halbleiterbaustein (4)

- zur Entgegennahme eines Erregerstromgrenzwerts ($I_{ERR,G}$) und eines Load-Response-Werts (LRC) von dem Steuergerät (8) eingerichtet ist,
- eingerichtet ist, die Generatorspannung ($U_{GEN}$) durch Einstellen eines Erregerstroms ($I_{ERR}$) mittels Einstellung eines den Erregerstrom bestimmenden Tastverhältnisses (TV) zu regeln,
- eine Erregerstrombegrenzungsfunktion zur Begrenzung des Erregerstroms auf den vorgegebenen Erregerstromgrenzwert ($I_{ERR,G}$) umfasst, und
- eine Load-Response-Control-Funktion zur Begrenzung der zeitlichen Zunahme des Tastverhältnisses (TV) unter Berücksichtigung des Load-Response-Werts (LRC) umfasst,

wobei das Steuergerät (8) eingerichtet ist,

- einen ersten Erregerstromgrenzwert und einen ersten Load-Response-Wert dem Regler-Halbleiterbaustein (4) vorzugeben derart, dass unter Verwendung der Erregerstrombegrenzungsfunktion der Erregerstrom ($I_{ERR}$) auf den seitens des Steuergeräts vorgegebenen ersten Erregerstromgrenzwert ($I_{ERR,G}$) ausgehend von einem Erregerstrom von null erhöht wird, wobei der erste Load-Response-Wert dem Regler-Halbleiterbaustein (4) für diese erste Erhöhung des Erregerstroms die Nichtverwendung der Load-Response-Control-Funktion vorgibt, und
- nach Erreichen dieses Erregerstromgrenzwerts ($I_{ERR,G}$), einen veränderten zweiten Load-Response-Wert und einen veränderten zweiten Erregerstromgrenzwert dem Regler-Halbleiterbaustein (4) vorzugeben derart, dass unter Verwendung der Load-Response-Funktion der Erregerstrom ($I_{ERR}$) weiter erhöht wird, wobei

- der veränderte, zweite Load-Response-Wert dem Regler-Halbleiterbaustein (4) für die weitere Erhöhung des Erregerstroms die Verwendung der Load-Response-Control-Funktion vorgibt und
- der veränderte, zweite Erregerstromgrenzwert dem Regler-Halbleiterbaustein (4) für die weitere Erhöhung des Erregerstroms die Nicht-Verwendung der Strombegrenzungsfunktion vorgibt oder der veränderte, zweite Erregerstromgrenzwert größer ist als der vorher vorgegebene erste Erregerstromgrenzwert.

**12.** Steuergerät zum Ansteuern eines Regler-Halbleiterbausteins (4) zur Regelung einer über einen Gleichrichter (1) gleichgerichteten Generatorspannung ($U_{GEN}$) eines an ein Bordnetz (7) eines Kraftfahrzeug angeschlossenen und über einen Antriebsmotor des Kraftfahrzeugs angetriebenen Mehrphasenwechselstrom-Generators, wobei der Regler-Halbleiterbaustein (4)

- zur Entgegennahme eines Erregerstromgrenzwerts ($I_{ERR,G}$) und eines Load-Response-Werts (LRC) von dem Steuergerät (8) eingerichtet ist,
- eingerichtet ist, die Generatorspannung ($U_{GEN}$) durch Einstellen eines Erregerstroms ($I_{ERR}$) mittels Einstellung eines den Erregerstrom bestimmenden Tastverhältnisses (TV) zu regeln,
- eine Erregerstrombegrenzungsfunktion zur Begrenzung des Erregerstroms auf den vorgegebenen Erregerstromgrenzwert ($I_{ERR,G}$) umfasst, und
- eine Load-Response-Control-Funktion zur Begrenzung der zeitlichen Zunahme des Tastverhältnisses (TV) unter Berücksichtigung des Load-Response-Werts (LRC) umfasst,

wobei das Steuergerät (8) alternativ eingerichtet ist,

- einen ersten Erregerstromgrenzwert und einen ersten Load-Response-Wert dem Regler-Halbleiterbaustein (4) vorzugeben derart, dass unter Verwendung der Erregerstrombegrenzungsfunktion der Erregerstrom ($I_{ERR}$) auf den seitens des Steuergeräts vorgegebenen ersten Erregerstromgrenzwert ($I_{ERR,G}$) ausgehend von einem Erregerstrom von null erhöht wird, wobei der erste Load-Response-Wert dem Regler-Halbleiterbaustein (4) für diese erste Erhöhung des Erregerstroms die Verwendung der Load-Response-Control-Funktion mit schneller zeitlicher Zunahme des Tastverhältnisses vorgibt, und
- nach Erreichen dieses Erregerstromgrenzwerts ($I_{ERR,G}$), einen veränderten zweiten Load-Response-Wert und einen veränderten zweiten Erregerstromgrenzwert dem Regler-Halbleiterbaustein (4) vorzugeben derart, dass unter Verwendung der Load-Response-Funktion der Erregerstrom ($I_{ERR}$) weiter erhöht wird, wobei

- der veränderte, zweite Load-Response-Wert dem Regler-Halbleiterbaustein (4) für die weitere Erhöhung des Erregerstroms die Verwendung der Load-Response-Control-funktion mit langsamerer zeitlicher Zunahme des Tastverhältnisses (TV) als vorher vorgibt und
- der veränderte, zweite Erregerstromgrenzwert dem Regler-Halbleiterbaustein (4) für die weitere Erhöhung des Erregerstroms die Nicht-Verwendung der Strombegrenzungsfunktion vorgibt oder der veränderte, zweite Erregerstromgrenzwert größer ist als der vorher vorgegebene erste Erregerstromgrenzwert.

## Claims

**1.** A method for starting the exciting current ($I_{ERR}$) of a multi-phase alternating current generator, which is connected to an electrical system (7) of a motor vehicle and is driven by means of a drive motor of the motor vehicle, upon activating the generator, wherein

- a rectifier (1) for generating a rectified voltage ($U_{GEN}$) is connected downstream of the generator,
- the rectified generator voltage ($U_{GEN}$) is regulated via a controller semiconductor component (4), wherein the controller semiconductor component (4)

- in order to regulate the generator voltage adjusts the exciting current ($I_{ERR}$) by adjusting a duty cycle (TV) determining the exciting current,
- is designed to receive an exciting current limit value ($I_{ERR,G}$) and a load-response value (LRC) from a control unit (8) connected to the controller semiconductor component (4),
- comprises an exciting current limiting function in order to limit the exciting current to the specified exciting current limit value ($I_{ERR,G}$), and
- comprises a load-response control function for limiting the increase over time of the duty cycle (TV), wherein the load-response control function limits the increase over time of the duty cycle (TV) under consideration of the load-response value (LRC),

wherein the method comprises the following steps:

- proceeding from an exciting current of zero, firstly increasing (101) the exciting current ($I_{ERR}$) to an exciting current limit value ($I_{ERR,G}$)

- with use of the exciting current limiting function, and
- with non-use of the load-response control function, wherein, in order to firstly increase the exciting current ($I_{ERR}$), a first exciting current limit value and a first load-response value are specified by the control unit (8) to the semiconductor component (4), such that the exciting current is increased with use of the exciting current limiting function to the first exciting current limit value specified by the control unit (8), and wherein the first load-response value specifies the non-use of the load-response control function to the controller semiconductor component (4) for the first increase of the exciting current,

- once this exciting current limit value ($I_{ERR,G}$) has been reached, increasing (103) the exciting current ($I_{ERR}$) further with use of the load-response control function, wherein, in order to increase the exciting current further, a modified second load-response value and a modified second exciting current limit value are specified by the control unit (8) to the controller semiconductor component (4), such that the exciting current is increased further with use of the load-response function, and wherein

- the modified second load-response value specifies the use of the load-response control function to the controller semiconductor component (4) for the further increase of the exciting current ($I_{ERR}$), and
- the modified second exciting current limit value specifies the non-use of the current limiting function to the controller semiconductor component (4) for the further increase of the exciting current ($I_{ERR}$), or the modified second exciting current limit value is greater than the previously specified first exciting current limit value.

2. A method for starting the exciting current ($I_{ERR}$) of a multi-phase alternating current generator, which is connected to an electrical system (7) of a motor vehicle and is driven by means of a drive motor of the motor vehicle, upon activating the generator, wherein

- a rectifier (1) for generating a rectified voltage ($U_{GEN}$) is connected downstream of the generator,
- the rectified generator voltage ($U_{GEN}$) is regulated via a controller semiconductor component (4), wherein the controller semiconductor component (4)

- in order to regulate the generator voltage adjusts the exciting current ($I_{ERR}$) by adjusting a duty cycle (TV) determining the exciting current,
- is designed to receive an exciting current limit value ($I_{ERR,G}$) and a load-response value (LRC) from a control unit (8) connected to the controller semiconductor component (4),
- comprises an exciting current limiting function in order to limit the exciting current to the specified exciting current limit value ($I_{ERR,G}$), and
- comprises a load-response control function for limiting the increase over time of the duty cycle (TV), wherein the load-response control function limits the increase over time of the duty cycle (TV) under consideration of the load-response value (LRC),

wherein the method comprises the following steps:

- firstly increasing (101) the exciting current ($I_{ERR}$) to an exciting current limit value ($I_{ERR,G}$)

- with use of the exciting current limiting function, and
- with use of the load-response control function with rapid increase over time of the duty cycle,

wherein, in order to firstly increase the exciting current ($I_{ERR}$), a first exciting current limit value and a first load-response value are specified by the control unit (8) to the semiconductor component (4), such that the exciting current is increased with use of the exciting current limiting function to the first exciting current limit value specified by the control unit (8), and wherein the first load-response value specifies the use of the load-response control function with rapid increase over time of the duty cycle to the controller semiconductor component (4) for the first increase of the exciting current,
- once this exciting current limit value ($I_{ERR,G}$) has been reached, increasing (103) the exciting current ($I_{ERR}$) further with use of the load-response control function with slower increase over time of the duty cycle (TV) as compared to the first increase (101) of the exciting current, wherein, in order to increase the exciting current further, a modified second load-response value and a modified second exciting current limit value are specified by the control unit (8) to the controller semiconductor component (4), such that the exciting current is increased further with use of the load-response function, and wherein

- the modified second load-response value specifies the use of the load-response control function with slower increase over time of the duty cycle than before to the controller semiconductor component (4) for the further increase of the exciting current ($I_{ERR}$), and
- the modified second exciting current limit value specifies the non-use of the current limiting function to the controller semiconductor component (4) for the further increase of the exciting current ($I_{ERR}$), or the modified second exciting current limit value is greater than the previously specified first exciting current limit value.

3. A method according to any one of the preceding claims, further comprising the following step:

   - determining the exciting current limit value ($I_{ERR,G}$) used in the first increase of the exciting current depending on one or more variables describing the operating state of the generator.

4. A method according to claim 3, wherein the exciting current limit value ($I_{ERR,G}$) is determined depending on the generator rotational speed ($n_{GEN}$) or a rotational speed that is proportional thereto.

5. A method according to either one of claims 3 or 4, wherein the exciting current limit value ($I_{ERR,G}$) is determined depending on the generator voltage ($U_{GEN}$) or a voltage that is characteristic therefor.

6. A method according to any one of claims 3-5, wherein the exciting current limit value ($I_{ERR,G}$) is determined depending on

   - the generator rotational speed ($n_{GEN}$) or a rotational speed that is proportional thereto, and
   - depending on the generator voltage ($U_{GEN}$) or a voltage that is characteristic therefor.

7. A method according to claim 6, wherein the exciting current limit value ($I_{ERR,G}$) used in the first increase of the exciting current is determined on the basis of the following equation:

$$I_{ERR,G} = a \cdot \left( \frac{U_{GEN} + c}{nn_{GEN}} \right) + b,$$

wherein $I_{ERR,G}$ represents the exciting current limit value, $U_{GEN}$ the generator voltage or a voltage that is characteristic therefor, $n_{GEN}$ the generator rotational speed, and a, b and c constants.

8. A method according to any one of the preceding claims, wherein the exciting current limit value ($I_{ERR,G}$) used in the first increase of the exciting current corresponds to a value of the exciting current at which the generator

   - delivers substantially no load current,
   - delivers a load current less than or equal to 15 A, or
   - delivers a load current less than or equal to 10% of the rated load current.

9. A method according to any one of the preceding claims, wherein the exciting current limit value ($I_{ERR,G}$) used in the first increase of the exciting current corresponds to a value of the exciting current that produces a phase voltage ($U_{PH}$) at the input of the rectifier (1), the peak-to-peak value of which is just below the sum of the voltage ($U_{GEN}$) at the output of the rectifier and corresponds to twice the forward voltage ($U_d$) of a semiconductor switch of the rectifier (1), or the peak-to-peak value of which corresponds substantially to this sum.

10. A method according to any one of the preceding claims, wherein the period of time between

   - the start of the first increase of the exciting current and
   - the start of the further increase of the exciting current lies in the range of from 50 ms to 400 ms, more especially lies at approximately 200 ms.

11. A control unit for controlling a controller semiconductor component (4) for regulating a generator voltage ($U_{GEN}$), rectified by means of a rectifier (1), of a multi-phase alternating current generator connected to an electrical system (7) of a motor vehicle and driven by means of a drive motor of the motor vehicle, wherein the controller semiconductor component (4)

- is designed to receive an exciting current limit value ($I_{ERR,G}$) and a load-response value (LRC) from the control unit (8),
- is designed to regulate the generator voltage ($U_{GEN}$) by adjusting an exciting current ($I_{ERR}$) by adjusting a duty cycle (TV) determining the exciting current,
- comprises an exciting current limiting function for limiting the exciting current to the specified exciting current limit value ($I_{ERR,G}$), and
- comprises a load-response control function for limiting the increase over time of the duty cycle (TV) under consideration of the load-response value (LRC),

wherein the control unit (8) is designed

- to specify a first exciting current limit value and a first load-response value to the controller semiconductor component (4), such that, with use of the exciting current limiting function, the exciting current ($I_{ERR}$) is increased, starting from an exciting current of zero, to the first exciting current limit value ($I_{ERR,G}$) specified by the control unit, wherein the first load-response value specifies the non-use of the load-response control function to the controller semiconductor component (4) for this first increase of the exciting current, and
- once this exciting current limit value ($I_{ERR,G}$) has been reached, to specify a modified second load-response value and a modified second exciting current limit value to the controller semiconductor component (4), such that the exciting current ($I_{ERR}$) is increased further with use of the load-response function, wherein

- the modified second load-response value specifies the use of the load-response control function to the controller semiconductor component (4) for the further increase of the exciting current, and
- the modified second exciting current limit value specifies the non-use of the current limiting function to the controller semiconductor component (4) for the further increase of the exciting current, or the modified second exciting current limit value is greater than the previously specified first exciting current limit value.

12. A control unit for controlling a controller semiconductor component (4) for regulating a generator voltage ($U_{GEN}$), rectified by means of a rectifier (1), of a multi-phase alternating current generator connected to an electrical system (7) of a motor vehicle and driven by means of a drive motor of the motor vehicle, wherein the controller semiconductor component (4)

- is designed to receive an exciting current limit value ($I_{ERR,G}$) and a load-response value (LRC) from the control unit (8),
- is designed to regulate the generator voltage ($U_{GEN}$) by adjusting an exciting current ($I_{ERR}$) by adjusting a duty cycle (TV) determining the exciting current,
- comprises an exciting current limiting function for limiting the exciting current to the specified exciting current limit value ($I_{ERR,G}$), and
- comprises a load-response control function for limiting the increase over time of the duty cycle (TV) under consideration of the load-response value (LRC),

wherein the control unit (8) is designed alternatively

- to specify a first exciting current limit value and a first load-response value to the controller semiconductor component (4), such that, with use of the exciting current limiting function, the exciting current ($I_{ERR}$) is increased, starting from an exciting current of zero, to the first exciting current limit value ($I_{ERR,G}$) specified by the control unit, wherein the first load-response value specifies the use of the load-response control function with rapid increase over time of the duty cycle to the controller semiconductor component (4) for this first increase of the exciting current, and
- once this exciting current limit value ($I_{ERR,G}$) has been reached, to specify a modified second load-response value and a modified second exciting current limit value to the controller semiconductor component (4), such that the exciting current ($I_{ERR}$) is increased further with use of the load-response function, wherein

- the modified second load-response value specifies the use of the load-response control function with slower increase over time of the duty cycle (TV) than before to the controller semiconductor component (4) for the further increase of the exciting current, and
- the modified second exciting current limit value specifies the non-use of the current limiting function to the controller semiconductor component (4) for the further increase of the exciting current, or the modified second exciting current limit value is greater than the previously specified first exciting current limit value.

## Revendications

1. Procédé permettant d'accroître le courant d'excitation ($I_{ERR}$) d'un générateur de courant alternatif polyphasé connecté au réseau embarqué (7) d'un véhicule et actionné par un moteur d'entraînement du véhicule, par activation du générateur, selon lequel :

   - en aval du générateur est branché un redresseur (1) permettant d'obtenir une tension redressée ($U_{GEN}$),
   - la tension du générateur redressée ($U_{GEN}$) est réglée par un module régulateur à semi-conducteur (4), qui :

      - pour permettre la régulation de la tension du générateur, règle le courant d'excitation ($I_{ERR}$) par réglage d'un rapport cyclique (TV) déterminant le courant d'excitation,
      - est réalisé pour recevoir une valeur limite du courant d'excitation ($_{IERR,G}$) et une valeur de réponse de charge (LRC) à partir d'un appareil de commande (8) relié au module régulateur à semi-conducteur (4),
      - comporte une fonction de limitation du courant d'excitation pour permettre de limiter le courant d'excitation à la valeur limite du courant d'excitation ($I_{ERR,G}$) prédéfinie, et
      - comporte une fonction de contrôle de la réponse de charge permettant de limiter l'augmentation en fonction du temps du rapport cyclique (TV) la fonction de contrôle de la réponse de charge limitant l'augmentation en fonction du temps du rapport cyclique (TV) en prenant en considération la valeur de réponse de charge (LRC),

   le procédé comprenant les étapes suivantes consistant à :

   - à partir d'un courant d'excitation égal à zéro, effectuer une première augmentation (101) du courant d'excitation ($I_{ERR}$) à la valeur limite du courant d'excitation ($I_{ERR,G}$),

      - en utilisant la fonction de limitation du courant d'excitation, et
      - en n'utilisant pas la fonction de contrôle de la réponse de charge, pour permettre la première augmentation du courant d'excitation ($I_{ERR}$) une première valeur limite du courant d'excitation et une première valeur de la réponse de charge étant fixées par l'appareil de commande (8) au module à semi-conducteur (4), de sorte que, en utilisant la fonction de limitation du courant d'excitation, le courant d'excitation soit augmenté à la première valeur du courant d'excitation fixée par l'appareil de commande (8), la première valeur de réponse de charge fixant au module régulateur à semi-conducteur (4) la non utilisation de la fonction de contrôle de la réponse de charge pour la première augmentation du courant d'excitation,

   - après avoir atteint cette valeur limite du courant d'excitation ($I_{ERR,G}$) poursuivre l'augmentation (103) du courant d'excitation ($I_{ERR}$) en utilisant la fonction de contrôle de la réponse de charge, pour poursuivre l'augmentation du courant d'excitation, une seconde valeur de réponse de charge modifiée et une seconde valeur limite du courant d'excitation modifié étant fixées par l'appareil de commande (8) au module régulateur à semi-conducteur (4), de sorte que la poursuite de l'augmentation du courant d'excitation soit effectuée en utilisant la fonction de réponse de charge, et

      - la seconde valeur de réponse de charge modifiée fixant au module régulateur à semi-conducteur (4) pour la poursuite de l'augmentation du courant d'excitation ($I_{ERR}$) l'utilisation de la fonction de contrôle de la réponse de charge, et
      - la seconde valeur limite du courant d'excitation modifiée fixant au module régulateur à semi-conducteur (4) pour la poursuite de l'augmentation du courant d'excitation ($I_{ERR}$), la non utilisation de la fonction de limitation du courant, ou la seconde valeur limite du courant d'excitation modifiée étant supérieure à la première valeur limite du courant d'excitation fixée auparavant.

2. Procédé permettant d'accroître le courant d'excitation ($I_{ERR}$) d'un générateur de courant alternatif polyphasé connecté au réseau embarqué (7) d'un véhicule et actionné par un moteur d'entraînement du véhicule, par activation du générateur, selon lequel :

   - en aval du générateur est branché un redresseur (1) permettant d'obtenir une tension redressée ($U_{GEN}$),
   - la tension du générateur redressée ($U_{GEN}$) est réglée par un module régulateur à semi-conducteur (4), qui :

      - pour permettre la régulation de la tension du générateur, règle le courant d'excitation ($I_{ERR}$) par réglage d'un rapport cyclique (TV) déterminant le courant d'excitation,

- est réalisé pour recevoir une valeur limite du courant d'excitation ($I_{ERR,G}$) et une valeur de réponse de charge (LRC) à partir d'un appareil de commande (8) relié au module régulateur à semi-conducteur (4),
- comporte une fonction de limitation du courant d'excitation pour limiter le courant d'excitation à la valeur limite du courant d'excitation ($I_{ERR,G}$) prédéfinie, et
- comporte une fonction de contrôle de réponse de charge permettant de limiter l'augmentation en fonction du temps du rapport cyclique (TV),
la fonction de contrôle de la réponse de charge effectuant la limitation de l'augmentation en fonction du temps du rapport cyclique (TV) en prenant en considération la valeur de réponse de charge (LRC),

le procédé comprenant les étapes suivantes consistant à :

- effectuer une première augmentation (101) du courant d'excitation ($I_{ERR}$) à la valeur limite du courant d'excitation ($I_{ERR,G}$) :

   - en utilisant la fonction de limitation du courant d'excitation, et
   - en utilisant la fonction de réponse de charge avec une augmentation en fonction du temps plus rapide du rapport cyclique,

- pour permettre la première augmentation du courant d'excitation ($I_{ERR}$), une première valeur limite du courant d'excitation et une première valeur de la réponse de charge étant fixées par l'appareil de commande (8) au module à semi-conducteur (4), de sorte, que, en utilisant la fonction de limitation du courant d'excitation, le courant d'excitation soit augmenté à la première valeur limite du courant d'excitation fixée par l'appareil de commande (8), et, la première valeur de réponse de charge fixent au module régulateur à semi-conducteur (4) pour la première augmentation du courant d'excitation l'utilisation de la fonction de contrôle de la réponse de charge avec une augmentation en fonction du temps plus rapide du rapport cyclique,

après avoir atteint cette valeur limite du courant d'excitation ($I_{ERR,G}$) poursuivre l'augmentation (103) du courant d'excitation ($I_{ERR}$) en utilisant la fonction de contrôle de la réponse de charge avec une augmentation en fonction du temps plus lente du rapport cyclique (TV) que lors de la première augmentation (101) du courant d'excitation, pour poursuivre l'augmentation du courant d'excitation, une seconde valeur de réponse de charge modifiée, et une seconde valeur limite du courant d'excitation étant fixées par l'appareil de commande (8) au module régulateur à semi-conducteur (4), de sorte que, la poursuite de l'augmentation du courant d'excitation soit effectuée en utilisant la fonction de réponse de charge, et

   - la seconde valeur de réponse de charge modifiée fixant au module régulateur à semi-conducteur (4), pour la poursuite de l'augmentation du courant d'excitation ($I_{ERR}$) l'utilisation de la fonction de contrôle de réponse de charge avec une augmentation en fonction du temps plus lente du rapport cyclique que précédemment, et
   - la seconde valeur limite du courant d'excitation modifiée fixant au module régulateur à semi-conducteur (4), pour la poursuite de l'augmentation du courant d'excitation ($I_{ERR}$), la non utilisation de la fonction de limitation du courant, ou, la seconde valeur limite du courant d'excitation modifiée étant supérieure à la première valeur limite du courant d'excitation fixée auparavant.

3. Procédé conforme à l'une des revendications précédentes, comprenant en outre une étape consistant à :

   - déterminer la valeur limite du courant d'excitation ($I_{ERR,G}$) utilisée lors de la première augmentation du courant d'excitation en fonction d'au moins une grandeur décrivant l'état de fonctionnement du générateur.

4. Procédé conforme à la revendication 3,
selon lequel la valeur limite du courant d'excitation ($I_{ERR,G}$) est déterminée en fonction de la vitesse de rotation du générateur ($n_{GEN}$) ou d'une vitesse de rotation proportionnelle à celle-ci.

5. Procédé conforme à l'une des revendications 3 et 4,
selon lequel la valeur limite du courant d'excitation ($I_{ERR,G}$) est déterminée en fonction de la tension du générateur ($U_{GEN}$) ou d'une tension caractéristique pour celle-ci.

6. Procédé conforme à l'une des revendications 3 à 5,
selon lequel :
la valeur limite du courant d'excitation ($I_{ERR,G}$) est déterminée en fonction :

- de la vitesse de rotation du générateur ($n_{GEN}$) ou d'une vitesse de rotation proportionnelle à celle-ci, et
- en fonction de la tension du générateur ($U_{GEN}$) ou d'une tension caractéristique pour celle-ci.

**7.** Procédé conforme à la revendication 6,
selon lequel la valeur limite du courant d'excitation ($I_{ERR,G}$) utilisée lors de la première augmentation du courant d'excitation est déterminée à partir de l'équation ci-dessous :

$$I_{ERR,G} = a \cdot \left(\frac{U_{GEN}+c}{nn_{GEN}}\right) + b \quad,$$

dans laquelle $I_{ERR,G}$ représente la valeur limite du courant d'excitation, $U_{GEN}$ représente la tension du générateur ou une tension caractéristique pour celle-ci, $n_{GEN}$ représente la vitesse de rotation du générateur et a, b et c sont des constantes.

**8.** Procédé conforme à l'une des revendications précédentes,
selon lequel la valeur limite du courant d'excitation ($I_{ERR,G}$) utilisée lors de la première augmentation du courant d'excitation correspond à une valeur du courant d'excitation pour laquelle le générateur :

- ne délivre essentiellement encore pas de courant de charge,
- délivre un courant de charge inférieur ou égal à 15 ampères ou,
- délivre un courant de charge qui est inférieur ou égal à 10% du courant de charge nominal.

**9.** Procédé conforme à l'une des revendications précédentes,
selon lequel la valeur limite du courant d'excitation ($I_{ERR,G}$) utilisée lors de la première augmentation du courant d'excitation correspond à une valeur du courant d'excitation qui provoque à l'entrée du redresseur (1) une tension de phase ($U_{PH}$) dont la valeur d'un pic à un autre est située juste au-dessous de la somme de la tension ($U_{GEN}$) à la sortie du redresseur et du double de la tension directe ($U_d$) d'un commutateur à semi-conducteur du redresseur (1), ou dont la valeur d'un pic à un autre correspond essentiellement à cette somme.

**10.** Procédé conforme à l'une des revendications précédentes,
selon lequel la durée entre :

- le début de la première augmentation du courant d'excitation, et
- le début de la poursuite de l'augmentation du courant d'excitation, est située dans la plage de 50 ms à 400 ms, et est en particulier égale à environ 200 ms.

**11.** Appareil de commande d'un module régulateur à semi-conducteur (4) permettant la régulation de la tension ($U_{GEN}$) redressée par un redresseur (1) d'un générateur de courant alternatif polyphasé branché sur le réseau embarqué (7) d'un véhicule et actionné par un moteur d'entraînement du véhicule,
dans lequel le module régulateur à semi-conducteur (4) :

- est susceptible de recevoir une valeur limite du courant d'excitation ($I_{ERR,G}$) et une valeur de réponse de charge (LRC) à partir de l'appareil de commande (8),
- est susceptible de régler la tension du générateur ($U_{GEN}$) en réglant le courant d'excitation ($I_{ERR}$) par réglage d'un rapport cyclique (TV) déterminant le courant d'excitation,
- comporte une fonction de limitation du courant d'excitation ($I_{ERR,G}$) permettant de limiter le courant d'excitation à la valeur limite du courant d'excitation prédéfinie, et
- comporte une fonction de contrôle de la réponse de charge permettant de limiter l'augmentation en fonction du temps du rapport cyclique (TV) en prenant en considération la valeur de réponse de charge (LRC),

l'appareil de commande (8) étant susceptible :

- de fixer une première valeur limite du courant d'excitation et une première valeur de réponse de charge au module régulateur à semi-conducteur (4) de sorte que, en utilisant la fonction de limitation du courant d'excitation, le courant d'excitation ($I_{ERR}$) soit augmenté, à partir d'un courant d'excitation égal à zéro à la première valeur limite du courant d'excitation ($I_{ERR,G}$) fixée par l'appareil de commande, la première valeur de réponse de charge fixant au module régulateur à semi-conducteur (4) pour cette première augmentation du courant d'excitation la non utilisation de la fonction de contrôle de réponse de charge, et

- après avoir atteint cette valeur limite du courant d'excitation ($I_{ERR,G}$) de fixer au module régulateur à semi-conducteur (4) une seconde valeur de réponse de charge modifiée et une seconde valeur limite du courant d'excitation modifiée de façon à poursuivre l'augmentation du courant d'excitation ($I_{ERR}$) en utilisant la fonction de contrôle de réponse de charge,

- la seconde valeur de réponse de charge modifiée, fixant au module à semi-conducteur (4), pour la poursuite de l'augmentation du courant d'excitation, l'utilisation de la fonction de contrôle de réponse de charge, et
- la seconde valeur limite du courant d'excitation modifiée fixant au module régulateur à semi-conducteur (4), pour la poursuite de l'augmentation du courant d'excitation la non utilisation de la fonction de limitation du courant, ou, la seconde valeur de limite du courant d'excitation, modifiée, étant supérieure à la première valeur limite du courant d'excitation fixée auparavant.

**12.** Appareil de commande d'un module régulateur à semi-conducteur (4) permettant la régulation de la tension ($U_{GEN}$) redressée par un redresseur (1) d'un générateur à courant alternatif polyphasé branché sur le réseau embarqué (7) d'un véhicule et actionné par un moteur d'entraînement de ce véhicule, dans lequel le module régulateur à semi-conducteur (4) :

- est susceptible de recevoir une valeur limite du courant d'excitation ($I_{ERR,G}$) et une valeur de réponse de charge (LRC) à partir de l'appareil de commande (8),
- est susceptible de régler la tension du générateur ($U_{GEN}$) en réglant le courant d'excitation ($I_{ERR}$) par réglage d'un rapport cyclique (TV) déterminant le courant d'excitation,
- comporte une fonction de limitation du courant d'excitation permettant de limiter le courant d'excitation à la valeur limite du courant d'excitation ($I_{ERR,G}$) prédéfinie, et
- comporte une fonction de contrôle de la réponse de charge permettant de limiter l'augmentation en fonction du temps du rapport cyclique (TV) en prenant en considération la valeur de réponse de charge (LRC),

l'appareil de commande (8) étant en option susceptible :

- de fixer au module régulateur à semi-conducteur (4) une première valeur limite du courant d'excitation et une première valeur de réponse de charge de sorte que, en utilisant la fonction de limitation du courant d'excitation, le courant d'excitation ($I_{ERR}$) soit augmenté, à partir d'un courant d'excitation égal à zéro à la première valeur limite du courant d'excitation ($I_{ERR,G}$) fixée par l'appareil de commande, la première valeur de réponse de charge fixant au module régulateur à semi-conducteur (4), pour cette première augmentation du courant d'excitation, l'utilisation de la fonction de contrôle de réponse de charge avec une augmentation en fonction du temps plus rapide du rapport cyclique, et

- après avoir atteint cette valeur limite du courant d'excitation ($I_{ERR,G}$) de fixer au module régulateur à semi-conducteur (4) une seconde valeur de réponse de charge modifiée et une seconde valeur limite du courant d'excitation modifiée de façon à poursuivre l'augmentation du courant d'excitation ($I_{ERR}$) en utilisant la fonction de contrôle de réponse de charge,
- la seconde valeur de réponse de charge modifiée fixant au module régulateur à semi-conducteur (4) pour la poursuite de l'augmentation du courant d'excitation l'utilisation de la fonction de contrôle de réponse de charge avec une augmentation en fonction du temps plus lente du rapport cyclique (TV) que précédemment, et
- la seconde valeur limite du courant d'excitation modifiée fixant au module régulateur à semi-conducteur (4) pour la poursuite de l'augmentation du courant d'excitation la non-utilisation de la fonction de limitation du courant, ou la seconde valeur de limitation du courant d'excitation modifiée étant supérieure à la première valeur du courant d'excitation fixée auparavant.

Fig. 1 (Stand der Technik)

Fig. 2 (Stand der Technik)

**98**

Bestimmen des Betriebszustands des Generators (insbesondere Generator-Drehzahl und Generatorspannung)

**99**

Bestimmen eines Erregerstromgrenzwerts $I_{ERR,G}$ in Abhängigkeit des Betriebszustands des Generators

**100**

Übertragen eines Sollspannungswerts $U_{GEN,soll}$ , eines Erregerstromgrenzwerts $I_{ERR,G}$ und eines Load-Response-Wert LRC=0 von dem Motorsteuergerät 8 an den Regler-Baustein 4

**101**

Schnelles Erhöhen des Erregerstroms $I_{ERR}$ auf den Erregerstromgrenzwert $I_{ERR,G}$ unter Verwendung der Erregerstrombegrenzungsfunktion und ohne Verwendung der Load-Response-Control-Funktion

**102**

Übertragen eines Load-Response-Wert LRC > 0 von dem Motorsteuergerät 8 an den Regler-Baustein 4

**103**

weiteres Erhöhen des Erregerstroms $I_{ERR}$ unter Verwendung der Load-Response-Control-Funktion

Fig. 3

Fig. 4

Fig. 5

Fig. 6

Fig. 7

**EP 2 987 237 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0878890 A